# EUROPEAN PATENT SPECIFICATION

(11) **EP 3 722 109 B1**
(45) Date of publication and mention of the grant of the patent: **08.03.2023**
(21) Application number: 18886687.5
(22) Date of filing: 03.12.2018
(51) Int. Cl.: B60C 11/13, B60C 11/03

(54) **TIRE**
REIFEN
PNEUMATIQUE

(30) Priority: 08.12.2017 JP 2017236464
(43) Date of publication of application: 14.10.2020
(73) Proprietor: Bridgestone Corporation, Tokyo 104-8340 (JP)
(72) Inventor: IWABUCHI, Sotaro, Tokyo 104-8340 (JP)
(74) Representative: Marks & Clerk LLP
(86) International application number: PCT/JP2018/044416
(87) International publication number: WO 2019/111855

(56) References cited:
- EP-A1- 1 568 514
- EP-A1- 2 546 076
- WO-A1-2010/070690
- WO-A1-2016/182076
- WO-A1-2016/182076
- JP-A- H0 699 705
- JP-A- 2002 219 906
- JP-A- 2004 196 145
- JP-A- 2004 196 145
- JP-A- 2010 254 240
- JP-A- 2017 507 078
- JP-U- S6 036 304
- US-A1- 2001 032 691

## Description

### Technical Field

The present invention relates to a tire having a groove formed at a tread portion.

### Background Art

Japanese Patent Application Laid-open No. 2009/512584 A discloses a technique for providing a contrast on a surface of an article by forming a pattern having a plurality of strands on at least a part of the surface of the article. Attention is drawn to the disclosures of WO2016/182076A1 and its equivalent US2018/141390A1, EP1568514A1, EP2546076A1, JP2004-196145A and US2001/032691A1.

### SUMMARY OF INVENTION

### Technical Problem

At a tread portion of a tire, a tread surface and grooves that partition the tread surface are formed. When a brightness of the tread surface and a brightness of a bottom surface of the respective grooves are the same, the contrast between the tread surface and the bottom surface of the grooves is weakened, and the grooves may look shallow even in an unused state. If the grooves look shallow, an unused tire may give an impression that the tire is a worn tire (a tire worn by friction with a road surface).

An object of the present invention is to suppress an unused tire from giving an impression like a worn tire, as the brightness of the tread surface of a tire and the brightness of the bottom surface of the groove of the tire are the same.

### Solution to Problem

A tire according to a first aspect is provided as claimed in claim 1.

According to the above configuration, the ratio of the groove width to the groove depth (groove width/groove depth) of the groove of the tread portion is from 0.5 to 8.0. Plural protrusions protrude from the bottom surface of the groove. A height of each protrusion is from 0.1 mm to 1.0 mm, and the plural protrusions are arranged having an interval of greater than 0.1 mm and less than or equal to 1.0 mm. For this reason, light incident to an inside of the groove is applied onto the protrusion and changed in a reflection direction. Then, an amount of light emitted to the outside of the groove decreases.

Here, for example, when the ratio of the groove width to the groove depth (groove width/groove depth) is larger than 8.0, the ratio of the grooves to the tread surface at the tread portion increases. That is, at the tread portion, the ratio of the tread surface that is in contact with a road surface decreases, so that the steering stability may decrease. However, since the ratio of the groove width to the groove depth of the groove of the tread portion is 8.0 or less, the decrease in steering stability is suppressed.

When the ratio of the groove width to the groove depth is less than 0.5, the groove depth becomes larger comparing with the groove width, so that an amount of light incident to an inside of the groove, reflected on the bottom surface of the groove, and emitted to the outside of the groove decreases. However, since the ratio of the groove width to the groove depth of the groove is 0.5 or more, an amount of light incident to the inside of the groove, reflected on the bottom surface of the groove, and emitted to the outside of the groove is not small. Since the plural protrusions protrude from the bottom surface of the groove at the height and the interval described above, even if the ratio of the groove width to the groove depth of the groove is 0.5 or more, the amount of light incident to the inside of the groove, reflected on the bottom surface of the groove, and emitted to the outside of the groove decreases.

As a result, as compared with a case where a brightness of the tread surface and a brightness of the bottom surface of the groove are the same, the contrast of appearance between the tread surface and the bottom surface of the groove is stronger, and it is possible to suppress an unused tire from giving an impression that the tire looks a worn tire.

A tire according to a second aspect has features that, in the tire according to the first aspect, a cross-sectional area of the groove is from 4 mm² to 500 mm².

According to the above configuration, the cross-sectional area of the groove is from 4 mm² to 500 mm².

Here, for example, when the cross-sectional area of the groove is larger than 500 mm², a ratio of the grooves to the tread surface in the tread portion increases. That is, in the tread portion, the ratio of the tread surface that is in contact with a road surface decreases, so that the steering stability may be decreased. However, since the cross-sectional area of the groove of the tire is 500 mm² or less, the decrease in steering stability is effectively suppressed.

When the cross-sectional area of the groove is less than 4 mm², the cross-sectional area of the groove is small, so that an amount of light incident to an inside of the groove, reflected on the bottom surface of the groove, and emitted to the outside of the groove is small. However, since the cross-sectional area of the groove of the tire is 4 mm² or more, the amount of light incident to the inside of the groove, reflected on the bottom surface of the groove, and emitted to the outside of the groove is not small. Here, since the plural protrusions protrude from the bottom of the groove at the height and interval described above, even if the cross-sectional area of the groove is 4 mm² or more, the amount of light incident to the inside of the groove, reflected on the bottom surface of the groove, and emitted to the outside of the groove decreases.

As a result, as compared with a case where a brightness of the tread surface and a brightness of the bottom surface of the groove are the same, the contrast of appearance between the tread surface and the bottom surface of the groove is stronger, and it is possible to effectively suppress an unused tire from giving an impression that the tire looks a worn tire.

A tire according to a third aspect has a feature that, in the tire according to the first aspect or the second aspect, an angle at a tread inner side formed between the tread surface and the side surface is from 80 degrees to 135 degrees.

According to the above configuration, an angle at a tread inner side formed between the tread surface and the side surface forming the groove is from 80 degrees to 135 degrees.

Here, for example, when the angle is less than 80 degrees, the rigidity of the corner formed by the tread surface and the side surface decreases, and block uneven wear during traveling may occur. However, since the angle formed by the tread surface and the side surface of the groove is 80 degrees or more, occurrence of block uneven wear during traveling, which is caused by the decreased rigidity of the corner formed by the tread surface 16 and the side surface 20, can be suppressed.

When the angle is more than 135 degrees, the angle is too large (the groove becomes too shallow), so that an amount of light incident to the inside of the groove, reflected on the side surface of the groove, and emitted to the outside of the groove increases. Therefore, when the protrusions are provided at the bottom surface, a low brightness L of the bottom surface is excessively emphasized, so that a sense of incongruity occurs and the quality of the appearance may decrease. However, the angle formed by the tread surface and the side surface of the groove is 135 degrees or less. With this, even when the protrusions are provided at the bottom surface, the low brightness of the bottom surface is not excessively emphasized, so that it is possible to suppress a sense of incongruity and a decrease in the quality of the appearance.

In the tire according to the first aspect, the groove is formed including a pair of side surfaces, the bottom surface, and a pair of curved surfaces respectively connecting a side surfaces and the bottom surface, and the tire further includes plural other protrusions that protrude from the side surfaces and the curved surfaces, a height of the other protrusions being from 0.1 mm to 1.0 mm, and the plural other protrusions being arranged having an interval of greater than 0.1 mm and less than or equal to 1.0 mm.

According to the above configuration, the plural other protrusions protrude from the side surfaces and the curved surfaces. A height of the respective other protrusion is from 0.1 mm to 1.0 mm, and the plural other protrusions are arranged having an interval of greater than 0.1 mm and less than or equal to 1.0 mm. Therefore, the contrast of appearance between the tread surface and the side surfaces, the curved surfaces, and the bottom surface of the groove is stronger. With this, it is possible to effectively suppress an unused tire from giving an impression that the tire looks a worn tire as compared with the case where the protrusions are formed only on the bottom surface.

In the tire according to the first aspect, in one alternative, the height of the protrusions formed at the bottom surfaces, a height of other protrusions formed at the curved surface, and a height of other protrusions formed at the side surfaces decrease in order from the protrusion formed at the bottom surface to the other protrusions formed at the side surfaces.

According to the above configuration, the height of the protrusion formed at the bottom surface, the height of the other protrusion formed at the curved surface, and the height of the other protrusion formed at the side surface decrease in order from the protrusion formed at the bottom surface to the other protrusion formed at the side surface. For this reason, an amount of light incident to an inside of the groove, applied onto the protrusion or the other protrusion to be changed in the reflection direction, and emitted to the outside of the groove increases in the order of the bottom surface, the curved surfaces, and the side surfaces. With this, a brightness increases in order from the bottom surface, the curved surfaces, the side surfaces, and the tread surface. As described above, since the brightness changes stepwise (gradually), it is possible to suppress the groove from giving a sense of incongruity as compared with the case where only a portion where the brightness is high and a portion where the brightness is low exist.

In the tire according to the first aspect, in another alternative, the interval between the protrusions formed at the bottom surface, an interval between other protrusions formed at the curved surfaces, and an interval between other protrusions formed at the side surfaces increase in order from the protrusions formed at the bottom surface to the other protrusions formed at the side surface.

According to the above configuration, the interval between the protrusions formed at the bottom surface, the interval between the other protrusions formed at the curved surfaces, and the interval between the other protrusions formed at the side surfaces increase in order from the protrusions formed at the bottom surface to the other protrusions formed at the side surfaces. For this reason, the amount of light incident to an inside of the groove, applied onto the protrusions or the other protrusions to be changed in the reflection direction, and emitted to the outside of the groove increases in order from the bottom surface, the curved surfaces, and the side surfaces. With this, a brightness increases in order from the bottom surface, the curved surfaces, the side surfaces, and the tread surface. As described above, since the brightness changes stepwise (gradually), it is possible to suppress the groove from giving a sense of incongruity as compared with the case where only a portion where the brightness is high and a portion where the brightness is low exist.

A tire according to a fourth aspect has a feature that, in the tire according to the first aspect, the other protrusions formed at the side surfaces are arranged at portions of the side surfaces on curved surface sides thereof.

According to the above configuration, the other protrusions formed at the side surfaces are arranged at portions of the side surfaces on the curved surface sides thereof. For this reason, the region where the other protrusions are formed is suppressed from being narrowed even when the tread surface is worn as compared with the case where the other protrusions are formed at the entire side surfaces. With this, the appearance of the groove can be suppressed from changing.

### Advantageous Effects of Invention

According to the invention, it is possible to suppress an unused tire from giving an impression that the tire looks e a worn tire as compared with a case where the brightness of the tread surface and the brightness of the bottom surface of the groove are the same.

### BRIEF DESCRIPTION OF DRAWINGS

Fig. 1 is a cross-sectional view showing a groove formed at a tread portion of a tire according to a first embodiment of the present invention.
Fig. 2 is a cross-sectional view showing the tire according to the first embodiment of the invention.
Fig. 3 is an enlarged plan view showing protrusions formed at a first low brightness region of a groove of a tire according to the first embodiment of the invention.
Fig. 4 is an enlarged plan view showing protrusions formed at a second low brightness region of a groove of a tire according to the first embodiment of the invention.
Fig. 5 is an enlarged plan view showing protrusions formed at a third low brightness region of a groove of a tire according to the first embodiment of the invention.
Fig. 6 is a plan view showing the protrusions formed at a groove of a tire according to the first embodiment of the invention.
Fig. 7A is a cross-sectional view showing protrusions formed at a groove of a tire according to the first embodiment of the invention.
Fig. 7B is a cross-sectional view showing protrusions formed at a groove of a tire according to the first embodiment of the invention.
Fig. 7C is a cross-sectional view showing protrusions formed at a groove of a tire according to the first embodiment of the invention.
Fig. 8 is a table showing evaluation results of tires of Examples according to the first embodiment of the invention and tires of Comparative examples.
Fig. 9 is an enlarged plan view showing protrusions formed at a first low brightness region of a groove of a tire according to a second embodiment of the invention.
Fig. 10 is an enlarged plan view showing protrusions formed at a second low brightness region of a groove of a tire according to a second embodiment of the invention.
Fig. 11 is an enlarged plan view showing protrusions formed at a third low brightness region of a groove of a tire according to a second embodiment of the invention.
Fig. 12A is a cross-sectional view showing protrusions formed at a groove of a tire according to a second embodiment of the invention.
Fig. 12B is a cross-sectional view showing protrusions formed at a groove of a tire according to the second embodiment of the invention.
Fig. 12C is a cross-sectional view showing protrusions formed at a groove of a tire according to the second embodiment of the invention.
Fig. 13 is a sectional perspective view showing protrusion formed at a groove of a tire according to a third embodiment of the invention.
Fig. 14 is a sectional perspective view showing protrusions formed at a groove of a tire according to a fourth embodiment of the invention.

### DESCRIPTION OF EMBODIMENTS

### <First Embodiment>

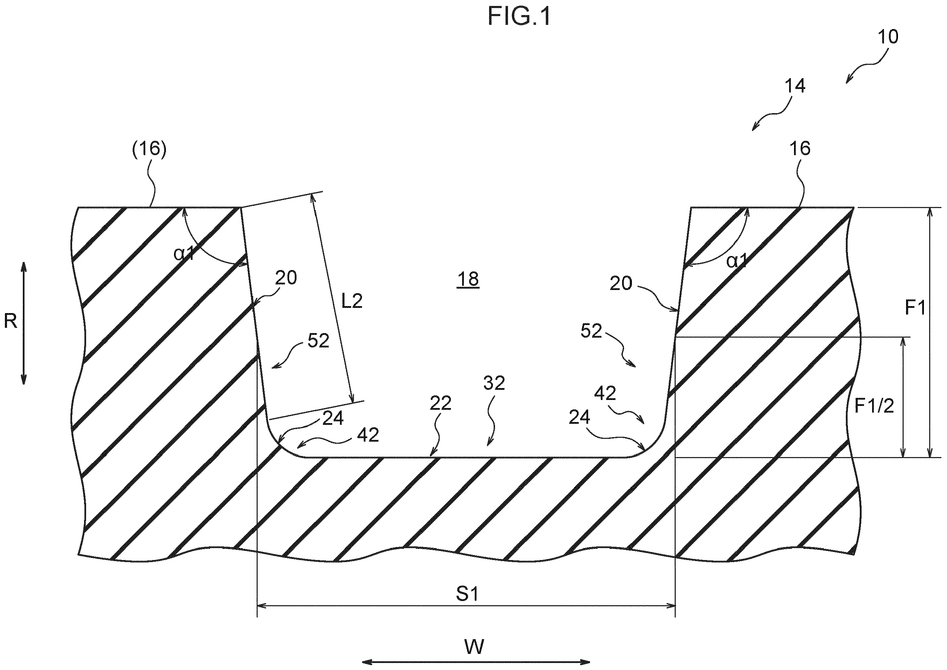

An example of a tire according to a first embodiment of the present invention will be described with reference to Fig. 1 to Fig. 9. The arrow C shown in the figure indicates a tire circumferential direction, the arrow R indicates a tire radial direction, and the arrow W indicates a tire width direction.

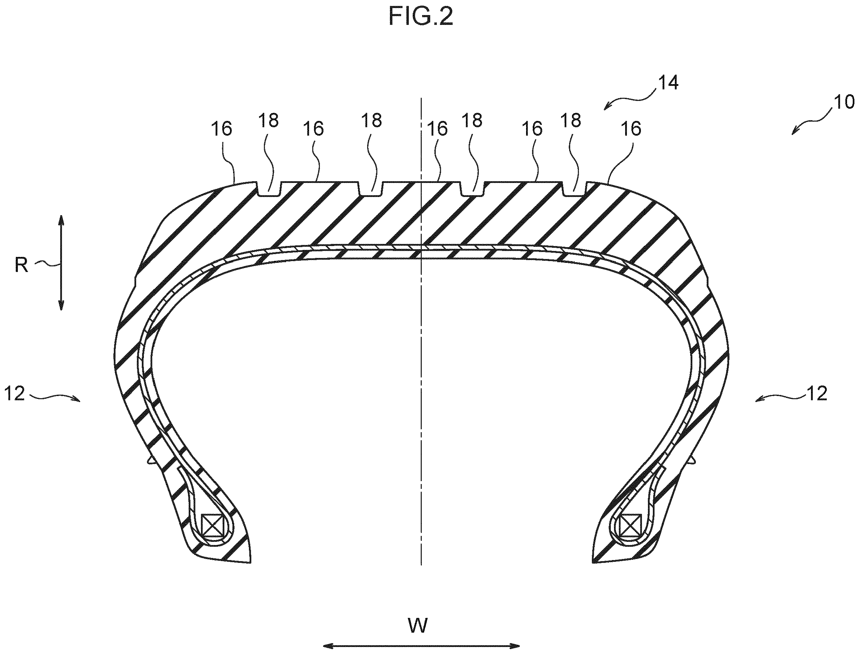

As shown in Fig. 2, a tire 10 includes a pair of sidewall portions 12 that faces outward in the tire width direction, and a tread portion 14 that annularly extends in the tire circumferential direction so as to straddle the sidewall portions 12 and faces outward in the tire radial direction (side opposite to an axis of the tire). The tread portion 14 includes a tread surface 16 that contacts a road surface, and plural grooves 18 that partition the tread surface 16 into plural portions.

As shown in Fig. 1, the groove 18 is formed by a pair of side surfaces 20 opposed to each other in the tire width direction, a bottom surface 22 facing outward in the tire radial direction, and curved surfaces 24 connecting the pair of side surfaces 20 and the bottom surface 22. A ratio of a groove width S1 of the groove 18 to a groove depth F1 (groove width S 1/groove depth F1) is from 0.5 to 8.0. The groove width S1 is measured at a position where a groove depth F1/2 is at a half of the groove depth F1. A sectional area of the groove 18 is from 4 mm² to 500 mm². An angle at a tread inner side formed between the side surface 20 of the groove 18 and the tread surface 16 (hereinafter referred to as "groove wall angle α1" in Fig. 1) is from 80 degrees to 135 degrees.

As will be described later in detail, the bottom surface 22 is defined as a first low brightness region 32 having a lower brightness than the tread surface 16. The curved surface 24 is defined as a second low brightness region 42 having a lower brightness than the tread surface 16 and having a higher brightness than the first low brightness region 32. A portion of the side surface 20 which is at a curved surface 24 side is defined as a third low brightness region 52 having a lower brightness than the tread surface 16 and having a higher brightness than the second low brightness region 42.

The first low brightness region 32, the second low brightness region 42, and the third low brightness region 52 are formed at the tire 10 by providing irregularities at portions, which correspond to the first low brightness region 32, the second low brightness region 42, and the third low brightness region 52, of a mold (die) for molding the tire 10 and protrusions, which will be described later, are formed at the respective regions 32, 42, 52.

### (First Low Brightness Region 32)

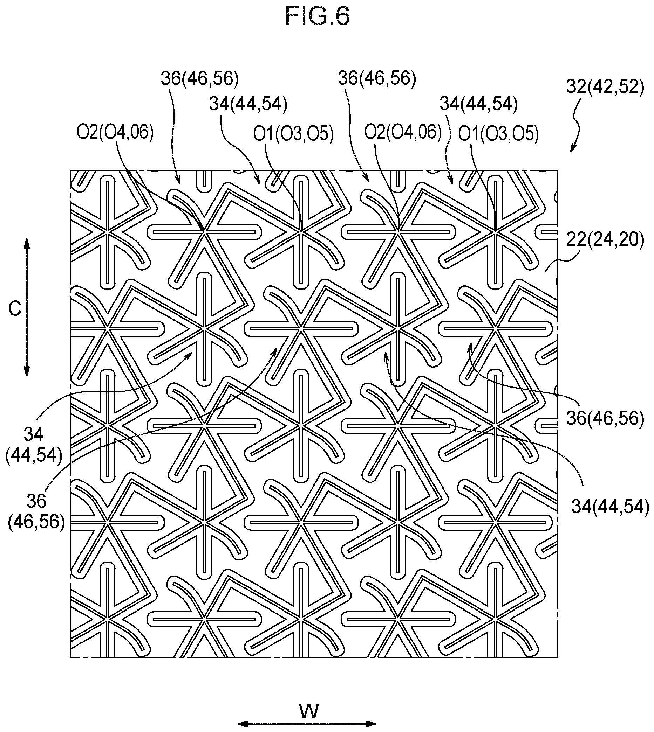

As shown in Fig. 6, the first low brightness region 32 includes plural first asterisk protrusions 34 and plural second asterisk protrusions 36 that protrude from the bottom surface 22. The first asterisk protrusions 34 and the second asterisk protrusions 36 are arranged alternately in the tire circumferential direction and the tire width direction. The first asterisk protrusion 34 and the second asterisk protrusion 36 are examples of protrusions.

### [First Asterisk Protrusion 34]

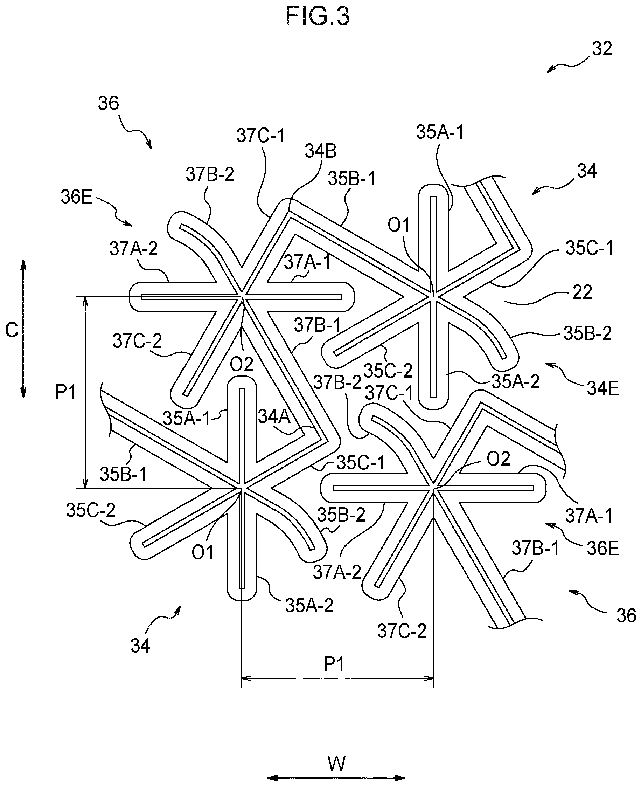

As shown in Fig. 3, the first asterisk protrusion 34 includes first extending portions 35A-1 and 35A-2, second extending portions 35B-1 and 35B-2, and third extending portions 35C-1 and 35C-2 that are extended in different directions from a center O1 as a base point, as viewed in a direction orthogonal to the bottom surface 22 (for example, the tire radial direction). Hereinafter, these six extending portions are collectively referred to as "extending portion 34E". One extending portion 34E and another extending portion 34E (excluding those extended in opposite directions from the center O1) form a linear shape bent at the center O1.

The first extending portion 35A-1 and the first extending portion 35A-2 are extended from the center O1 in opposite directions, and a continuous linear shape is formed by the first extending portion 35A-1 and the first extending portion 35A-2. The first extending portion 35A-1 extends from the center O1 to one side in the tire circumferential direction (upper side in the figure), and the first extending portion 35A-2 extends from the center O1 to the other side in the tire circumferential direction (lower side in the figure). The first extending portion 35A-1 and the first extending portion 35A-2 have the same length. Hereinafter, the first extending portion 35A-1 and the first extending portion 35A-2 are collectively referred to as "first extending portion 35A".

The second extending portion 35B-1 and the second extending portion 35B-2 are extended from the center O1 in opposite directions, and a continuous linear shape is formed by the second extending portion 35B-1 and the second extending portion 35B-2. The second extending portion 35B-1 and the second extending portion 35B-2 are inclined with respect to the tire width direction so that an end portion on one side in the tire width direction (left side in the figure) is located on one side in the tire circumferential direction (upper side in the figure) as compared with an end portion on the other side in tire width direction (right side in the figure).

The second extending portion 35B-1 extends from the center O1 to one side in the tire width direction, and the second extending portion 35B-2 extends from the center O1 to the other side in the tire width direction. The second extending portion 35B-1 is longer than the second extending portion 35B-2. A portion at a distal end side of the second extending portion 35B-2 is curved to the other side in the tire circumferential direction. Hereinafter, the second extending portion 35B-1 and the second extending portion 35B-2 are collectively referred to as "second extending portion 35B".

The third extending portion 35C-1 and the third extending portion 35C-2 are extended from the center O1 in opposite directions, and a continuous linear shape is formed by the third extending portion 35C-1 and the third extending portion 35C-2. The third extending portion 35C-1 and the third extending portion 35C-2 are inclined with respect to the tire width direction so that an end portion on one side in the tire width direction (left side in the figure) is located on the other side in the tire circumferential direction (lower side in the figure) as compared with an end portion on the other side in tire width direction (right side in the figure).

The third extending portion 35C-1 extends from the center O1 to the other side in the tire width direction, and the third extending portion 35C-2 extends from the center O1 to one side in the tire width direction. The third extending portion 35C-1 is shorter than the third extending portion 35C-2. Hereinafter, the third extending portion 35C-1 and the third extending portion 35C-2 are collectively referred to as "third extending portion 35C".

Each of the six extending portions 34E forms an angle of 60° with an adjacent extending portion 34E. In other words, the first asterisk protrusion 34 has a shape in which the six extending portions 34E are radially extended from the center O1.

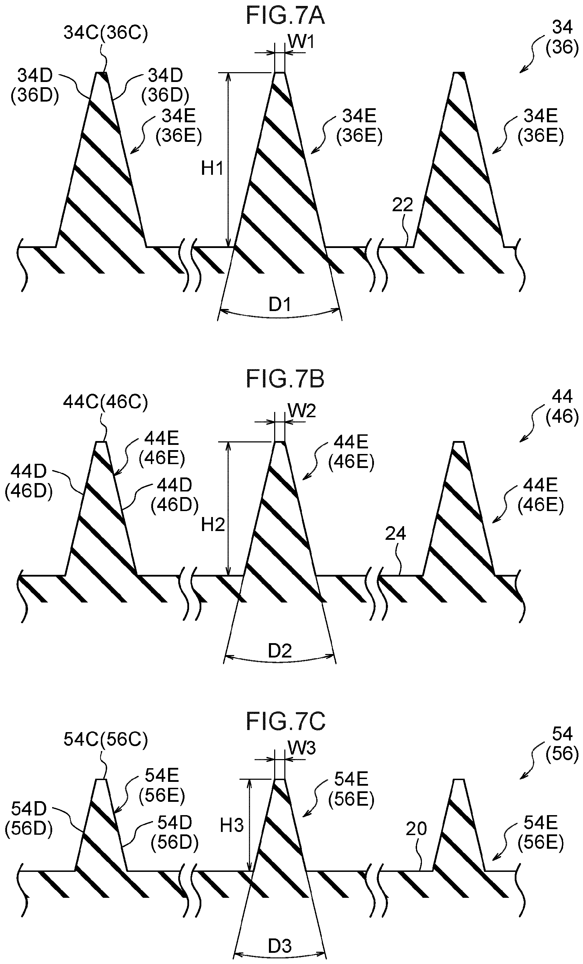

As shown in Fig. 7A, the extending portion 34E of the first asterisk protrusion 34 has a cross sectional shape, in a direction orthogonal to the extending direction, that is a substantially isosceles triangular shape having a flat top surface 34C. That is, the first asterisk protrusion 34 has a top surface 34C and a pair of side surfaces 34D. In the present embodiment, a width of the top surface 34C (W1 in the figure) is 0.02 mm, and an apex angle of the first asterisk protrusion 34 (D1 in the figure) is 26 degrees. A height of the first asterisk protrusion 34 (H1 in the figure) is one predetermined value of from 0.1 mm to 1.0 mm, and in the present embodiment, is 0.8 mm, as an example. When the height of the protrusion is less than 0.1 mm, it is difficult to form the protrusion, and it may not be possible to attenuate incident light to lower the brightness to an intended level (details will be described later).

By setting the height of the protrusion to 1.0 mm or less, the difference between the rigidity of the portion where the protrusion is formed and the rigidity of the portion around the protrusion where the protrusion is not formed is reduced, and the local stress concentration is suppressed.

The dimensions such as the groove width of the groove 18, the groove depth, the height of the protrusion, and a distance (pitch) between the protrusions, which will be described later in the present embodiment, can be measured using the VR-3000 series of one-shot 3D measuring macroscope of Keyence Corporation as an example.

### [Second Asterisk Protrusion 36]

As shown in Fig. 3, the second asterisk protrusion 36 has the same shape as the first asterisk protrusion 34. Specifically, the second asterisk protrusion 36 has a shape obtained by rotating the first asterisk protrusion 34 clockwise about the center O1 by 90 degrees, and turning the first asterisk protrusion 34 that has been rotated by 90 degrees about the center O1 upside down, as viewed in the direction orthogonal to the bottom surface 22.

In the second asterisk protrusion 36, portions corresponding to the first extending portions 35A-1 and 35A-2, the second extending portions 35B-1 and 35B-2, the third extending portions 35C-1 and 35C-2, and the center O1 of the first asterisk protrusion 34 are referred to as first extending portions 37A-1 and 37A-2, second extending portions 37B-1 and 37B-2, third extending portions 37C-1 and 37C-2, and a center O2. Hereinafter, the above-mentioned six extending portions are collectively referred to as "extending portion 36E".

In the second asterisk protrusion 36, a portion corresponding to the top surface 34C of the first asterisk protrusion 34 is referred to as a top surface 36C. In the second asterisk protrusion 36, portions corresponding to the side surfaces 34D of the first asterisk protrusion 34 are referred to as side surfaces 36D (see Fig. 7A).

### [Others]

As shown in Fig. 3 and Fig. 6, the first asterisk protrusions 34 and the second asterisk protrusions 36 are arranged alternately in the tire circumferential direction and the tire width direction, and cover the entire first low brightness region 32 (see Fig. 1).

The distal end of the first extending portion 35A-1 of the first asterisk protrusion 34 is disposed between the second extending portion 37B-1 and the third extending portion 37C-2 of the adjacent second asterisk protrusions 36 in the tire circumferential direction. The distal end of the first extending portion 35A-2 is disposed between the second extending portion 37B-2 and the third extending portion 37C-1 of the adjacent second asterisk protrusions 36 in the tire circumferential direction. The distal end of the first extending portion 37A-1 of the second asterisk protrusion 36 is disposed between the second extending portion 35B-1 and the third extending portion 35C-2 of the adjacent first asterisk protrusions 34 in the tire width direction. The distal end of the first extending portion 37A-2 is disposed between the second extending portion 35B-2 and the third extending portion 35C-1 of the adjacent first asterisk protrusions 34 in the tire width direction.

The distal end of the third extending portion 35C-1 of the first asterisk protrusion 34 and the distal end of the second extending portion 37B-1 of the adjacent second asterisk protrusion 36 in the tire circumferential direction are coupled to each other. With this, a coupling portion 34A is formed. The distal end of the second extending portion 35B-1 of the first asterisk protrusion 34 and the distal end of the third extending portion 37C-1 of the adjacent second asterisk protrusion 36 in the tire width direction are coupled to each other. With this, a coupling portion 34B is formed.

In this configuration, the first asterisk protrusions 34 and the second asterisk protrusions 36 are coupled in a stepwise manner from the other side to one side in the tire circumferential direction via the coupling portions 34A and 34B.

In the first asterisk protrusions 34 and the second asterisk protrusions 36 adjacent in the tire circumferential direction and the tire width direction, an interval between the center O1 and the center O2 (hereinafter, referred to as "interval P1") is one predetermined valueof greater than 0.1 mm and less than or equal to 1.0 mm. When the interval P1 is 0.1 mm or less, it is difficult to form the protrusions. When the interval P1 is more than 1.0 mm, it may not be possible to attenuate the incident light to lower the brightness to an intended level (details will be described later).

Here, the first low brightness region 32 described in the present embodiment is a region where a value of the brightness L* measured using a handy spectrophotometer (NF333) of Nippon Denshoku Industries Co., Ltd. is 10 or less as an example.

### (Second Low Brightness Region 42)

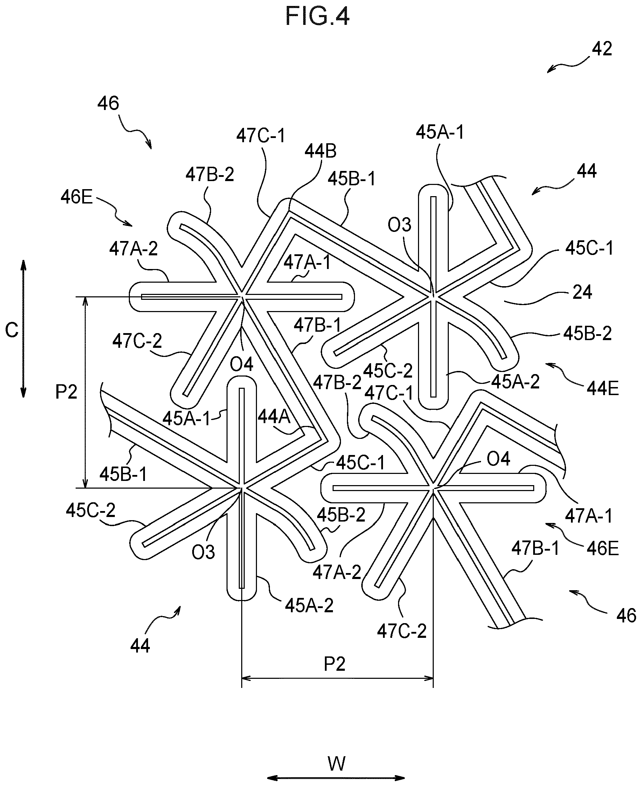

As shown in Fig. 4, the second low brightness region 42 includes plural first asterisk protrusions 44 and plural second asterisk protrusions 46 that protrude from the curved surface 24. The first asterisk protrusions 44 and the second asterisk protrusions 46 are arranged alternately in the tire circumferential direction and the tire width direction. The first asterisk protrusion 44 and the second asterisk protrusion 46 are examples of other protrusions.

### [First Asterisk Protrusion 44]

Regarding the first asterisk protrusion 44, portions different from the first asterisk protrusion 34 (see Fig. 3) of the first low brightness region 32 will be mainly described.

As shown in Fig. 4, the first asterisk protrusion 44 has a shape similar to that of the first asterisk protrusion 34 (see Fig. 3) of the first low brightness region 32 as viewed in a direction orthogonal to the curved surface 24. In the first asterisk protrusion 44, portions corresponding to the first extending portions 35A-1 and 35A-2, the second extending portions 35B-1 and 35B-2, the third extending portions 35C-1 and 35C-2, and the center O1 of the first asterisk protrusion 34 are referred to as first extending portions 45A-1 and 45A-2, second extending portions 45B-1 and 45B-2, third extending portions 45C-1 and 45C-2, and a center O3. Hereinafter, the above-mentioned six extending portions are collectively referred to as "extending portion 44E".

As shown in Fig. 7B, the extending portion 44E of the first asterisk protrusion 44 has a cross sectional shape, in a direction orthogonal to the extending direction, that is a substantially isosceles triangular shape having a flat top surface 44C. That is, the first asterisk protrusion 44 has the top surface 44C and a pair of side surfaces 44D. In the present embodiment, a width of the top surface 44C (W2 in the figure) is 0.02 mm, and an apex angle of the first asterisk protrusion 44 (D2 in the figure) is 26 degrees. A height of the first asterisk protrusion 44 (H2 in the figure) is one predetermined value of from 0.1 mm to 1.0 mm, and in the present embodiment, is 0.6 mm as an example.

### [Second Asterisk Protrusion 46]

As shown in Fig. 4, the second asterisk protrusion 46 has the same shape as the first asterisk protrusion 44. Specifically, the second asterisk protrusion 46 has a shape obtained by rotating the first asterisk protrusion 44 clockwise about the center O3 by 90 degrees, and turning the first asterisk protrusion 44 that has been rotated by 90 degrees about the center O3 upside down, as viewed in a direction orthogonal to the curved surface 24.

In the second asterisk protrusion 46, portions corresponding to the first extending portions 45A-1 and 45A-2, the second extending portions 45B-1 and 45B-2, the third extending portions 45C-1 and 45C-2, and the center O3 of the first asterisk protrusion 44 are referred to as first extending portions 47A-1 and 47A-2, second extending portions 47B-1 and 47B-2, third extending portions 47C-1 and 47C-2, and a center 04. Hereinafter, the above-mentioned six extending portions are collectively referred to as "extending portion 46E".

In the second asterisk protrusion 46, a portion corresponding to the top surface 44C of the first asterisk protrusion 44 is referred to as a top surface 46C. In the second asterisk protrusion 46, portions corresponding to the side surfaces 44D of the first asterisk protrusion 44 are referred to as side surfaces 46D (see Fig. 7B).

### [Others]

As shown in Fig. 4, the first asterisk protrusions 44 and the second asterisk protrusions 46 are arranged alternately in the tire circumferential direction and the tire width direction, and cover the entire second low brightness region 42 (see Fig. 1).

The distal end of the first extending portion 45A-1 of the first asterisk protrusion 44 is disposed between the second extending portion 47B-1 and the third extending portion 47C-2 of the adjacent second asterisk protrusion 46 in the tire circumferential direction. The distal end of the first extending portion 45A-2 of the first asterisk protrusion 44 is disposed between the second extending portion 47B-2 and the third extending portion 47C-1 of the adjacent second asterisk protrusions 46 in the tire circumferential direction. The distal end of the first extending portion 47A-1 of the second asterisk protrusion 46 is disposed between the second extending portion 45B-1 and the third extending portion 45C-2 of the adjacent first asterisk protrusions 44 in the tire width direction. The distal end of the first extending portion 47A-2 of the second asterisk protrusion 46 is disposed between the second extending portion 45B-2 and the third extending portion 45C-1 of the adjacent first asterisk protrusions 44 in the tire width direction.

The distal end of the third extending portion 45C-1 of the first asterisk protrusion 44 and the distal end of the second extending portion 47B-1 of the adjacent second asterisk protrusion 46 in the tire circumferential direction are coupled to each other. With this, a coupling portion 44A is formed. The distal end of the second extending portion 45B-1 of the first asterisk protrusion 44 and the distal end of the third extending portion 47C-1 of the adjacent second asterisk protrusion 46 in the tire width direction are coupled to each other. With this, a coupling portion 44B is formed.

In this configuration, the first asterisk protrusions 44 and the second asterisk protrusions 46 are coupled in a stepwise manner from the other side to one side in the tire circumferential direction via the coupling portions 44A and 44B.

In the first asterisk protrusions 44 and the second asterisk protrusions 46 adjacent in the tire circumferential direction and the tire width direction, an interval between the center O3 and the center O4 (hereinafter, referred to as "interval P2") is the same value as the above-described interval P1. The interval P2 is a distance along the curved surface 24.

Here, the second low brightness region 42 described in the present embodiment is a region where a value of the brightness L* measured using a handy spectrophotometer (NF333) of Nippon Denshoku Industries Co., Ltd. is greater than 10 and less than or equal to 12 as an example.

### (Third Low Brightness Region 52)

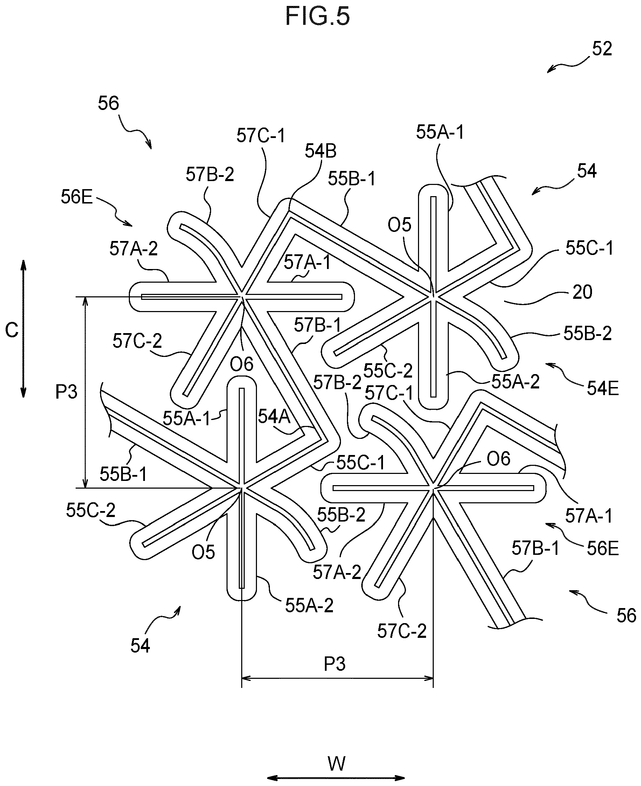

As shown in Fig. 5, the third low brightness region 52 includes plural first asterisk protrusions 54 that protrude from a portion of the side surface 20 on the curved surface 24 side, and plural second asterisk protrusions 56 that protrude from the portion of the side surface 20 on the curved surface 24 side. The first asterisk protrusions 54 and the second asterisk protrusions 56 are arranged alternately in the tire circumferential direction and the tire radial direction. The first asterisk protrusion 54 and the second asterisk protrusion 56 are examples of other protrusions.

In the present embodiment, the "portion of the side surface 20 on the curved surface 24 side" refers to a lower half area from the lower end of the side surface 20 within the entire length of the side surface 20 in the groove depth direction (L2 in Fig. 1).

### [First Asterisk Protrusion 54]

Regarding the first asterisk protrusion 54, portions different from the first asterisk protrusion 34 (see Fig. 3) of the first low brightness region 32 will be mainly described.

As shown in Fig. 5, the first asterisk protrusion 54 has a shape similar to that of the first asterisk protrusion 34 (see Fig. 3) of the first low brightness region 32 as viewed in a direction orthogonal to the side surface 20. In the first asterisk protrusion 54, portions corresponding to the first extending portions 35A-1 and 35A-2, the second extending portions 35B-1 and 35B-2, the third extending portions 35C-1 and 35C-2, and the center O1 of the first asterisk protrusion 34 are referred to as first extending portions 55A-1 and 55A-2, second extending portions 55B-1 and 55B-2, third extending portions 55C-1 and 55C-2, and a center O5. Hereinafter, the above-mentioned six extending portions are collectively referred to as "extending portion 54E".

As shown in Fig. 7C, the extending portion 54E of the first asterisk protrusion 54 has a cross sectional shape, in a direction orthogonal to the extending direction, that is a substantially isosceles triangular shape having a flat top surface 54C. That is, the first asterisk protrusion 54 has the top surface 54C and a pair of side surfaces 54D. In the present embodiment, a width of the top surface 54C (W3 in the figure) is 0.02 mm, and an apex angle of the first asterisk protrusion 54 (D3 in the figure) is 26 degrees. A height of the first asterisk protrusion 54 (H3 in the figure) is one predetermined value of from 0.1 mm to 1.0 mm, and in the present embodiment, is 0.4 mm as an example.

### [Second Asterisk Protrusion 56]

As shown in Fig. 5, the second asterisk protrusion 56 has the same shape as the first asterisk protrusion 54. Specifically, the second asterisk protrusion 56 has a shape obtained by rotating the first asterisk protrusion 54 clockwise about the center O5 by 90 degrees, and turning the first asterisk protrusion 54 that has been rotated by 90 degrees about the center O3 upside down, as viewed in the direction orthogonal to the side surface 20.

In the second asterisk protrusion 56, portions corresponding to the first extending portions 55A-1 and 55A-2, the second extending portions 55B-1 and 55B-2, the third extending portions 55C-1 and 55C-2, and the center O5 of the first asterisk protrusion 54 are referred to as first extending portions 57A-1 and 57A-2, second extending portions 57B-1 and 57B-2, third extending portions 57C-1 and 57C-2, and a center O6. Hereinafter, the above-mentioned six extending portions are collectively referred to as "extending portion 56E".

In the second asterisk protrusion 56, a portion corresponding to the top surface 54C of the first asterisk protrusion 54 is referred to as a top surface 56C. In the second asterisk protrusion 56, portions corresponding to the side surfaces 54D of the first asterisk protrusion 54 are referred to as side surfaces 56D (see Fig. 7C).

### [Others]

As shown in Fig. 5, the first asterisk protrusions 54 and the second asterisk protrusions 56 are arranged alternately in the tire circumferential direction and the tire radial direction, and cover the entire third low brightness region 52 (see Fig. 1).

The distal end of the first extending portion 55A-1 of the first asterisk protrusion 54 is disposed between the second extending portion 57B-1 and the third extending portion 57C-2 of the adjacent second asterisk protrusion 56 in the tire circumferential direction. The distal end of the first extending portion 55A-2 of the first asterisk protrusion 54 is disposed between the second extending portion 57B-2 and the third extending portion 57C-1 of the adjacent second asterisk protrusion 56 in the tire circumferential direction. The distal end of the first extending portions 57A-1 of the second asterisk protrusion 56 is disposed between the second extending portion 55B-1 and the third extending portion 55C-2 of the adjacent first asterisk protrusion 54 in the tire radial direction. The distal end of the first extending portions 57A-2 of the second asterisk protrusion 56 is disposed between the second extending portion 55B-2 and the third extending portion 55C-1 of the adjacent first asterisk protrusion 54 in the tire radial direction.

The distal end of the third extending portion 55C-1 of the first asterisk protrusion 54 and the distal end of the second extending portion 57B-1 of the adjacent second asterisk protrusion 56 in the tire circumferential direction are coupled to each other. With this, a coupling portion 54A is formed. The distal end of the second extending portion 55B-1 of the first asterisk protrusion 54 and the distal end of the third extending portion 57C-1 of the adjacent second asterisk protrusion 56 in the tire radial direction are coupled to each other. With this, a coupling portion 54B is formed.

In this configuration, the first asterisk protrusions 54 and the second asterisk protrusions 56 are coupled in a stepwise manner from the other side to one side in the tire circumferential direction via the coupling portions 54A and 54B.

In the first asterisk protrusions 54 and the adjacent second asterisk protrusions 56 in the tire circumferential direction and the tire radial direction, an interval between the center O5 and the center O6 (hereinafter, referred to as "interval P3") is the same value as the above-described interval P1.

Here, the third low brightness region 52 described in the present embodiment is a region where a value of the brightness L* measured using a handy spectrophotometer (NF333) of Nippon Denshoku Industries Co., Ltd. is greater than 12 and less than or equal to 14 as an example. In the tread portion 14 of the tire 10, the tread surface 16, and the region of the side surface 20 on the tread surface 16 side where no protrusion is formed are regions where a value of the brightness L* measured using a handy spectrophotometer (NF333) of Nippon Denshoku Industries Co., Ltd. is more than 20 as an example.

### (Actions)

Next, functions of the tire according to the present embodiment will be described.

In the first low brightness region 32 of the bottom surface 22 in the groove 18 of the tread portion 14 shown in Fig. 1, light incident on the first asterisk protrusion 34 and the second asterisk protrusion 36 is applied onto the side surfaces 34D and 36D shown in Fig. 7A. Then, the incident light is attenuated while being repeatedly reflected between the facing side surfaces 34D and 36D, and is emitted to the outside of the groove 18. In this manner, the amount of light that has entered the inside of the groove 18 and is emitted to the outside of the groove 18 decreases.

In the second low brightness region 42 of the curved surface 24 in the groove 18, light incident on the first asterisk protrusion 44 and the second asterisk protrusion 46 is applied onto the side surfaces 44D and 46D shown in Fig. 7B. Then, the incident light is attenuated while being repeatedly reflected between the facing side surfaces 44D and 46D, and is emitted to the outside of the groove 18. In this manner, the amount of light incident on the inside of the groove 18 and emitted to the outside of the groove 18 decreases.

In the third low brightness region 52 at the portion of the side surface 20 of the groove 18 on the curved surface 24 side, light incident on the first asterisk protrusion 54 and the second asterisk protrusion 56 is applied onto the side surfaces 54D and 56D shown in Fig. 7C. Then, the incident light is attenuated while being repeatedly reflected between the facing side surfaces 54D and 56D, and is emitted to the outside of the groove 18. In this manner, the amount of light incident on the inside of the groove 18 and emitted to the outside of the groove 18 decreases.

In the region of the side surface 20 on the tread surface 16 side where no protrusion is formed, light from the outside is applied onto a flat surface on which no protrusion is formed and is reflected, and is emitted to the outside of the groove 18.

Regarding the tread surface 16, light from the outside is applied onto a flat surface on which no protrusion is formed and is reflected.

The heights of the first asterisk protrusion 34 and the second asterisk protrusion 36 formed in the first low brightness region 32 are set to 0.8 mm. The heights of the first asterisk protrusion 44 and the second asterisk protrusion 46 formed in the second low brightness region 42 are 0.6 mm. The heights of the first asterisk protrusion 54 and the second asterisk protrusion 56 formed in the third low brightness region 52 is 0.4 mm.

Since the intervals P1, P2, and P3 of the respective protrusions have the same value, the ratio of the curved surface 24 of the second low brightness region 42 per unit area is larger than the ratio of the bottom surface 22 of the first low brightness region 32 per unit area. The ratio of the side surface 20 of the third low brightness region 52 per unit area is larger than the ratio of the curved surface 24 of the second low brightness region 42 per unit area.

With this, the amount of light emitted to the outside of the groove 18 in the second low brightness region 42 is larger than the amount of light emitted to the outside of the groove 18 in the first low brightness region 32. The amount of light emitted to the outside of the groove 18 in the third low brightness region 52 is larger than the amount of light emitted to the outside of the groove 18 in the second low brightness region 42. That is, the brightness L* increases in the order of the first low brightness region 32, the second low brightness region 42, the third low brightness region 52, and the tread surface 16.

### (Summary)

According to the above configuration, the ratio of the groove width to the groove depth (groove width/groove depth) of the groove 18 of the tread portion 14 is from 0.5 to 8.0.

Here, for example, when the ratio of the groove width to the groove depth of the groove 18 is larger than 8.0, the ratio of the grooves 18 to the tread surface at the tread portion 14 increases. That is, in the tread portion 14, arears of the tread surface 16 that is in contact with a road surface decreases, so that the steering stability may be decreased. However, since the ratio of the groove width to the groove depth of the groove 18 of the tread portion 14 is 8.0 or less, the decrease in steering stability is suppressed.

When the ratio of the groove width to the groove depth of the groove 18 is less than 0.5, the groove depth becomes larger compared with the groove width, so that the amount of light incident to the inside of the groove 18, reflected on the bottom surface 22 of the groove 18, and emitted to the outside of the groove 18 is small. However, in the tire 10, the ratio of the groove width to the groove depth of the groove 18 is 0.5 or more, so that the amount of light incident to the inside of the groove 18, reflected on the bottom surface 22 of the groove 18, and emitted to the outside of the groove 18 is not small. Note that, the first low brightness region 32 is formed at the bottom surface 22, even if the ratio of the groove width to the groove depth of the groove 18 is 0.5 or more, the amount of light incident to the inside of the groove 18, reflected on the bottom surface 22 of the groove 18, and emitted to the outside of the groove 18 is decreased.

In this way, by lowering the brightness L* of the first low brightness region 32 formed at the bottom surface 22 of the groove 18 with respect to the brightness L* of the tread surface 16, the contrast of appearance between the tread surface 16 and the bottom surface 22 of the groove 18 becomes strong (identification between the tread surface 16 and the groove 18 becomes reliable) as compared with the case where the brightness L* of the tread surface and the brightness L* of the bottom surface are the same. It is possible to suppress an unused tire from giving an impression that the tire looks a worn tire.

The cross-sectional area of the groove 18 of the tread portion 14 is from 4 mm² to 500 mm².

Here, for example, when the cross-sectional area of the groove 18 is larger than 500 mm², the ratio of the grooves to the tread surface of the tread portion 14 increases. That is, at the tread portion 14, the ratio of the tread surface 16 that is in contact with a road surface decreases, so that the steering stability may be decreased. However, since the cross-sectional area of the groove 18 is 500 mm² or less, the decrease in steering stability is effectively suppressed.

When the cross-sectional area of the groove 18 is less than 4 mm², the cross-sectional area of the groove 18 becomes small, so that the amount of light incident to the inside of the groove 18, reflected on the bottom surface 22 of the groove 18, and emitted to the outside of the groove 18 is small. However, since the cross-sectional area of the groove 18 of the tire 10 is 4 mm² or more, the amount of light incident to the inside of the groove 18, reflected on the bottom surface 22 of the groove 18, and emitted to the outside of the groove 18 is not small. Note that, since the first low brightness region 32 is formed at the bottom surface 22, even if the cross-sectional area of the groove is 4 mm² or more, the amount of light incident to the inside of the groove 18, reflected on the bottom surface 22 of the groove 18, and emitted to the outside of the groove 18 is decreased.

In this way, by lowering the brightness L* of the first low brightness region 32 formed at the bottom surface 22 of the groove 18 with respect to the brightness L* of the tread surface 16, the contrast of appearance between the tread surface 16 and the bottom surface 22 of the groove 18 becomes stronger as compared with the case where the brightness L* of the tread surface and the brightness L* of the bottom surface are the same. It is possible to effectively suppress an unused tire from giving an impression that the tire looks a worn tire.

In the tire 10, the groove wall angle on the tread inner side formed between the tread surface 16 and the side surface 20 is from 80 degrees to 135 degrees.

Here, for example, when the groove wall angle is less than 80 degrees, the rigidity of the corner formed by the tread surface 16 and the side surface 20 decreases, and block uneven wear during traveling may occur. However, since the groove wall angle of the tire 10 is 80 degrees or more, occurrence of block uneven wear during traveling, which is caused by the decreased rigidity of the corner formed by the tread surface 16 and the side surface 20, can be suppressed.

When the groove wall angle is more than 135 degrees, the groove wall angle is too large (the groove becomes too shallow), so that the amount of light incident to the inside of the groove 18, reflected on the side surface 20 of the groove 18, and emitted to the outside of the groove 18 increases. When the protrusions are provided on the bottom surface 22, the low brightness L* of the bottom surface 22 is excessively emphasized, so that a sense of incongruity occurs and the quality of the appearance may be decreased. However, the groove wall angle is 135 degrees or less. With this, even when the protrusions are provided on the bottom surface 22, the low brightness L* of the bottom surface 22 is not excessively emphasized, so that it is possible to suppress a sense of incongruity and a decrease in the quality of the appearance.

In recent years, due to environmental considerations, demand for tires having low rolling resistance that contribute to low fuel consumption of automobiles has been increasing. As a means for reducing the rolling resistance of a tire, for example, there is a technique for reducing the weight of a tire by thinning tread rubber and reducing the amount of rubber. When the tread rubber is thinned, the groove provided at the tread surface may become shallow. However, as described above, in the tire 10, the contrast of appearance between the tread surface 16 and the bottom surface 22 of the groove 18 becomes stronger, and it is possible to suppress the groove 18 of the tire 10 from giving an impression that the groove 18 looks shallow.

In the tire 10, the brightness L* of the first low brightness region 32 on the bottom surface 22 of the groove 18, the brightness L* of the second low brightness region 42 of the curved surface 24 of the groove 18, and the brightness L* of the third low brightness region 52 on the portion of the side surface 20 of the groove 18 on the curved surface 24 side are lower than the brightness L* of the tread surface 16. For this reason, the contrast of appearance between the portion on the bottom surface 22 side including the bottom surface 22and the tread surface 16 becomes stronger as compared with the case where only the brightness L* of the first low brightness region 32 of the bottom surface 22 of the groove 18 is lower than the brightness L* of the tread surface 16. With this, it is possible to suppress an unused tire from giving an impression that the tire is a worn tire.

In the tire 10, the brightness L* increases in the order of the first low brightness region 32, the second low brightness region 42, the third low brightness region, and the tread surface 16. As described above, since the brightness L* changes stepwise (gradually), the groove 18 is suppressed from giving a sense of incongruity as compared with the case where only a portion where the brightness L* is high and a portion where the brightness L* is low are formed in a tire.

Further, in the tire 10, the third low brightness region 52 is formed at the portion of the side surface 20 of the groove 18 on the curved surface 24 side. For this reason, the third low brightness region 52 is suppressed from being narrowed even when the tread surface 16 is worn as compared with the case where the third low brightness region 52 is formed at the entire side surface 20 of the groove 18. With this, the appearance of the groove 18 can be suppressed from changing.

The respective extending portions 34E of the first asterisk protrusion 34 extend in different directions, and the respective extending portions 36E of the second asterisk protrusion 36 extend in different directions. With this, even when the first low brightness region 32 is viewed while changing the viewing angle with respect to the first low brightness region 32, it is possible to suppress the appearance from being viewed differently. The second low brightness region 42 and the third low brightness region 52 also have the same functions.

Further, the first asterisk protrusions 34 include the six extending portions 34E extended in different directions and coupled at the center O1, and the second asterisk protrusions 36 include the six extending portions 36E extended in different directions and coupled at the center O2. Therefore, each of the first asterisk protrusions 34 and the second asterisk protrusions 36 is hard to fall down, and the durability of each of the first asterisk protrusions 34 and the second asterisk protrusions 36 can be improved. The first asterisk protrusions 44 and the second asterisk protrusions 46, and the first asterisk protrusions 54 and the second asterisk protrusions 56 also have the same functions.

The first asterisk protrusions 34 and the second asterisk protrusions 36 are coupled in a stepwise manner via the coupling portions 34A and 34B. With this, the first asterisk protrusions 34 and the second asterisk protrusions 36 support each other via the coupling portions 34A and 34B, and the fall of the first asterisk protrusions 34 and the second asterisk protrusions 36 is suppressed, and the durability can be improved. The first asterisk protrusions 44 and the second asterisk protrusions 46, and the first asterisk protrusions 54 and the second asterisk protrusions 56 also have the same functions.

### (Evaluation)

In order to confirm the effects of the present invention, tires of Examples 1 to 4 to which the present invention is applied and tires of Comparative Examples 1 to 4 are prepared, and the following evaluations are performed.

### [Evaluation Tires]

As the test tires, tires each having a size of 205/55R16 and a tire cross-section height SH of 114 mm were used.

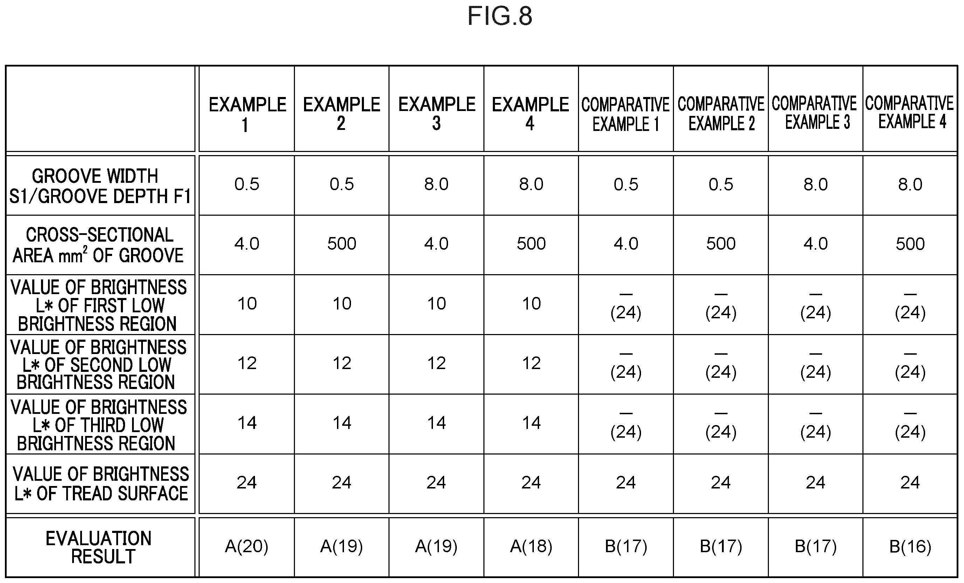

The tires of Examples 1 to 4 and Comparative Examples 1 to 4 have the same structure as the tire according to the first embodiment of the invention. The respective test tires are different in the ratio of the groove width S1 to the groove depth F1 of the groove (main groove) that extends in the tire circumferential direction (groove width S1/groove depth F1) and the value of the cross-sectional area of the groove as shown in the table of Fig. 8. Further, the values of the brightness L* of the first low brightness region 32, the brightness L* of the second low brightness region 42, and the brightness L* of the third low brightness region 52 are different as shown in the table of Fig. 8.

In the tires of Comparative Examples 1 to 4, no protrusion is formed inside the groove, and the brightness L* of each surface forming the groove is the same as L* of the tread surface. The groove wall angle is 95 degrees in all the test tires.

### [Evaluation Method and Evaluation Content]

The respective test tires were arranged without mounting each test tire on a vehicle so that the tire width direction was directed in the horizontal direction. Then, outdoors on a sunny day, 20 viewers visually evaluated the grooves of the test tires from plural directions.

Regarding the evaluation content, it was evaluated whether or not an unused tire gave an impression that the tire looked a worn tire due to the contrast of appearance between the tread surface and the bottom surface of the groove. Evaluation was made based on the definition that the case where the number of viewers who evaluated that an unused tire did not give an impression that the tire looked a worn tire was 18 or more as "A", the case where it was 10 to 17 as "B", and the case where it was 9 or less as "C".

### [Evaluation Results]

As shown in the table of Fig. 8, the evaluation results of the tires of Examples 1 to 4 to which the invention was applied were "A". On the other hand, the evaluation results of the tires of Comparative Examples 1 to 4 were "B". In this evaluation, none of the evaluation results of the Examples and the Comparative Examples were "C". As can be seen from the evaluation results, regarding the tires of Examples 1 to 4, it is possible to suppress an unused tire from giving an impression that the tire looks a worn tire due to the contrast of appearance between the tread surface and the bottom surface of the groove, as compared with the tires of Comparative Examples 1 to 4.

### <Second Embodiment>

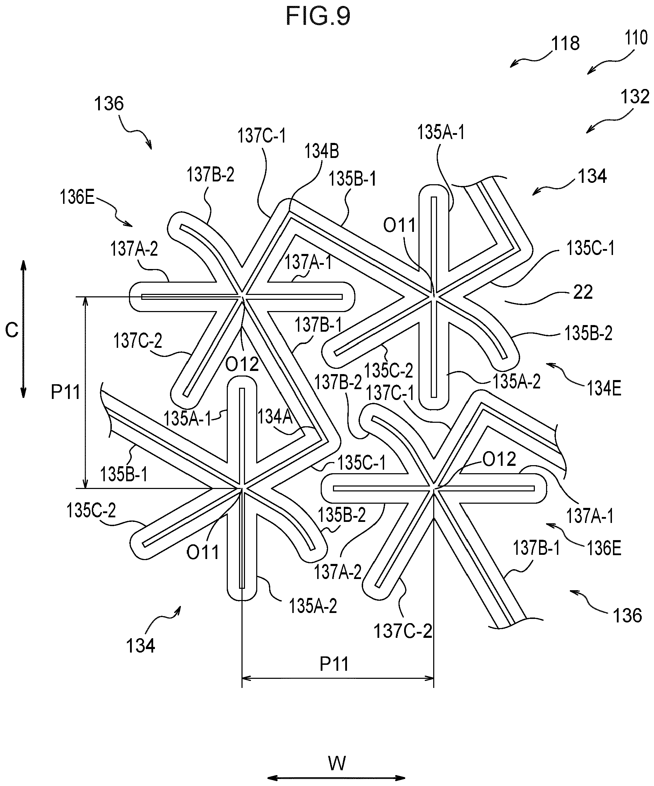

Next, a tire 110 according to a second embodiment of the invention will be described with reference to Fig. 9 to Fig. 12. Regarding the tire 110 of the second embodiment, portions different from the tire 10 of the first embodiment will be mainly described.

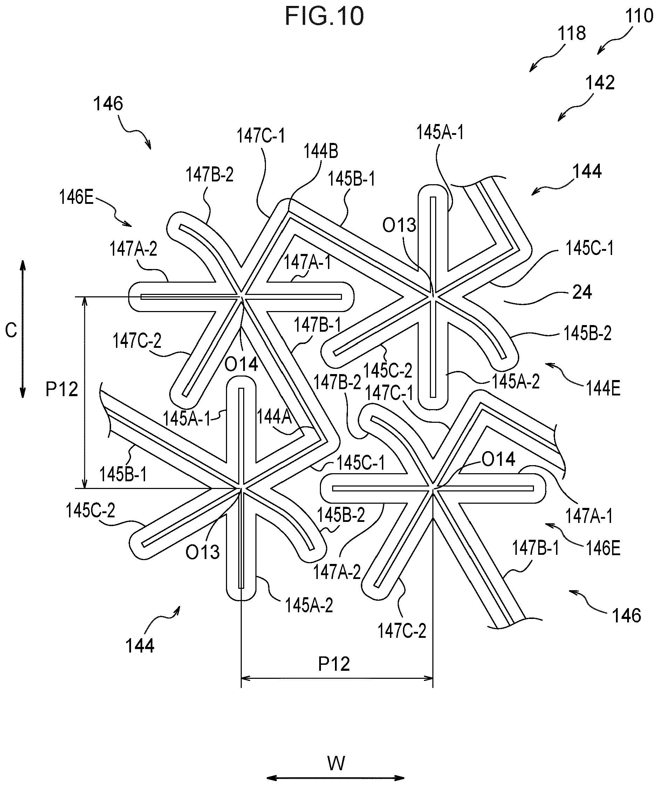

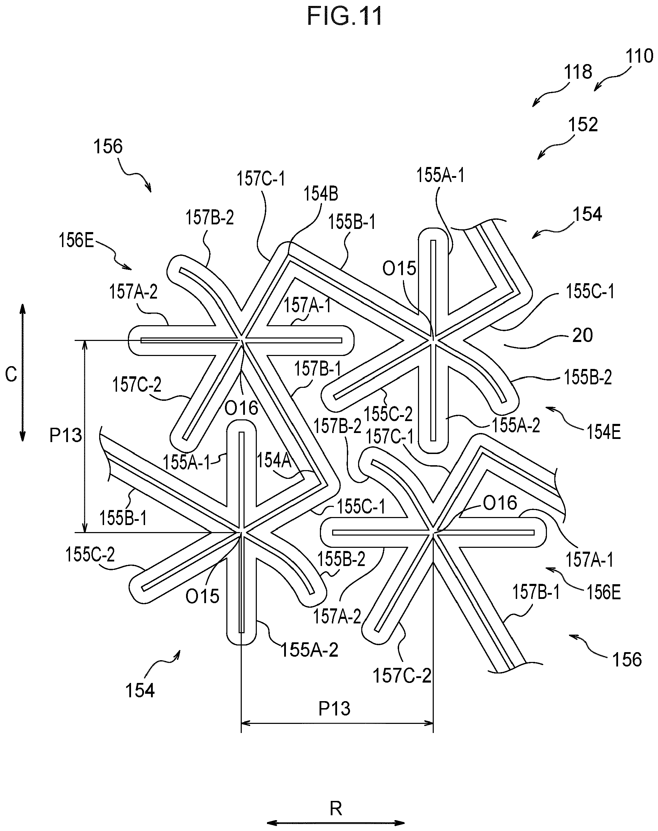

The bottom surface 22 of a groove 118 of the tire 110 is a first low brightness region 132 having a lower brightness than the tread surface 16 (see Fig. 9). The curved surface 24 is a second low brightness region 142 having a lower brightness than the tread surface 16 and having a higher brightness than the first low brightness region 132 (see Fig. 10). A portion of the side surface 20 on the curved surface 24 side is a third low brightness region 152 having a lower brightness than the tread surface 16 and having a higher brightness than the second low brightness region 142 (see Fig. 11).

### (First Low Brightness Region 132)

As shown in Fig. 9, the first low brightness region 132 includes plural first asterisk protrusions 134 and plural second asterisk protrusions 136 that protrude from the bottom surface 22. The first asterisk protrusions 134 and the second asterisk protrusions 136 are arranged alternately in the tire circumferential direction and the tire width direction. The first asterisk protrusion 134 and the second asterisk protrusion 136 are examples of protrusions.

### [First Asterisk Protrusion 134]

As shown in Fig. 9, the first asterisk protrusion 134 has a shape similar to that of the first asterisk protrusion 34 of the first embodiment (see Fig. 3) as viewed from a direction orthogonal to the bottom surface 22. In the first asterisk protrusion 134, portions corresponding to the first extending portions 35A-1 and 35A-2, the second extending portions 35B-1 and 35B-2, the third extending portions 35C-1 and 35C-2, and the center O1 of the first asterisk protrusion 34 are referred to as first extending portions 135A-1 and 135A-2, second extending portions 135B-1 and 135B-2, third extending portions 135C-1 and 135C-2, and a center O11. Hereinafter, the above-mentioned six extending portions are collectively referred to as "extending portion 134E".

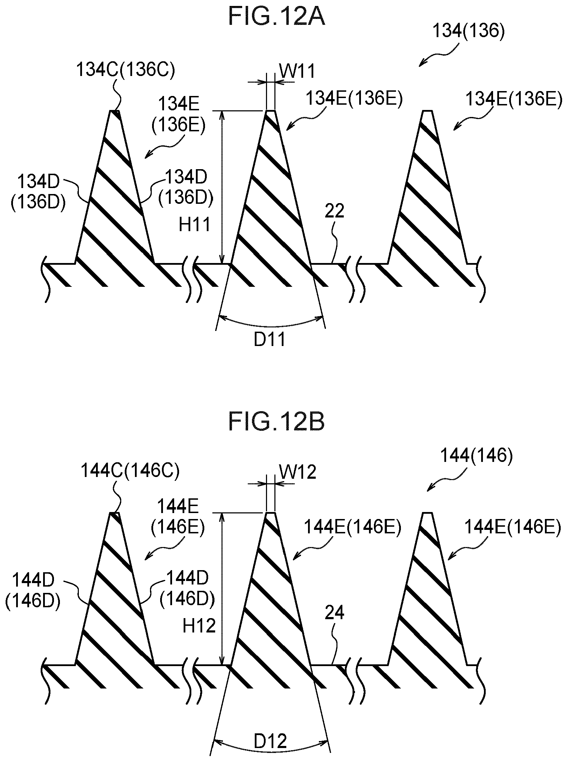

As shown in Fig. 12A, the extending portion 134E of the first asterisk protrusion 134 has a cross sectional shape, in a direction orthogonal to the extending direction, that is a substantially isosceles triangular shape having a flat top surface 134C. That is, the first asterisk protrusion 134 has the top surface 134C and a pair of side surfaces 134D. In the present embodiment, a width of the top surface 134C (W11 in the figure) is 0.02 mm, and an apex angle of the first asterisk protrusion 134 (D11 in the figure) is 26 degrees. A height of the first asterisk protrusion 44 (H11 in the figure) is one predetermined value of from 0.1 mm to 1.0 mm.

### [Second Asterisk Protrusion 136]

As shown in Fig. 9, the second asterisk protrusion 136 has the same shape as the first asterisk protrusion 134. Specifically, the second asterisk protrusion 136 has a shape obtained by rotating the first asterisk protrusion 134 clockwise about the center O11 by 90 degrees, and turning the first asterisk protrusion 134 that has been rotated by 90 degrees about the center O11 upside down, as viewed from the direction orthogonal to the bottom surface 22.

In the second asterisk protrusion 136, portions corresponding to the first extending portions 135A-1 and 135A-2, the second extending portions 135B-1 and 135B-2, the third extending portions 135C-1 and 135C-2, and the center O11 of the first asterisk protrusion 134 are referred to as first extending portions 137A-1 and 137A-2, second extending portions 137B-1 and 137B-2, third extending portions 137C-1 and 137C-2, and a center 012. Hereinafter, the above-mentioned six extending portions are collectively referred to as "extending portion 136E".

In the second asterisk protrusion 136, a portion corresponding to the top surface 134C of the first asterisk protrusion 134 is referred to as a top surface 136C. In the second asterisk protrusion 136, portions corresponding to the side surfaces 134D of the first asterisk protrusion 134 are referred to as side surfaces 136D (see Fig. 12A).

### [Others]

In the first asterisk protrusions 134 and the second asterisk protrusions 136 adjacent in the tire circumferential direction and the tire width direction, an interval between the center O11 and the center 012 (hereinafter, referred to as "interval P11") is one predetermined value of greater than 0.1 mm and less than or equal to 1.0 mm. In the present embodiment, the interval P11 is 0.6 mm as an example. The first low brightness region 132 described in the present embodiment is a region where a value of the brightness L* measured using a handy spectrophotometer (NF333) of Nippon Denshoku Industries Co., Ltd. is 10 or less as an example.

### (Second Low Brightness Region 142)

As shown in Fig. 10, the second low brightness region 142 includes plural first asterisk protrusions 144 and plural second asterisk protrusions 146 that protrude from the curved surface 24. The first asterisk protrusions 144 and the second asterisk protrusions 146 are arranged alternately in the tire circumferential direction and the tire width direction. The first asterisk protrusion 144 and the second asterisk protrusion 146 are examples of other protrusions.

### [First Asterisk Protrusion 144]

As shown in Fig. 10, the first asterisk protrusion 144 has a shape similar to that of the first asterisk protrusion 134 (see Fig. 9) as viewed in a direction orthogonal to the curved surface 24. In the first asterisk protrusion 144, portions corresponding to the first extending portions 135A-1 and 135A-2, the second extending portions 135B-1 and 135B-2, the third extending portions 135C-1 and 135C-2, and the center O11 of the first asterisk protrusion 134 are referred to as first extending portions 145A-1 and 145A-2, second extending portions 145B-1 and 145B-2, third extending portions 145C-1 and 145C-2, and a center 013. Hereinafter, the above-mentioned six extending portions are collectively referred to as "extending portion 144E".

As shown in Fig. 12B, the extending portion 144E of the first asterisk protrusion 144 has a cross sectional shape, in a direction orthogonal to the extending direction, that is a substantially isosceles triangular shape having a flat top surface 144C. That is, the first asterisk protrusion 144 has the top surface 144C and a pair of side surfaces 144D. In the present embodiment, a width of the top surface 144C (W12 in the figure) is 0.02 mm, and an apex angle of the first asterisk protrusion 144 (D12 in the figure) is 26 degrees. A height of the first asterisk protrusion 144 (H12 in the figure) is one predetermined value of from 0.1 mm to 1.0 mm. In the present embodiment, the height of the first asterisk protrusion 144 (H12 in the figure) is the same as the height of the first asterisk protrusion 134.

### [Second Asterisk Protrusion 146]

As shown in Fig. 10, the second asterisk protrusion 146 has the same shape as the first asterisk protrusion 144. Specifically, the second asterisk protrusion 146 has a shape obtained by rotating the first asterisk protrusion 144 clockwise about the center 013 by 90 degrees, and turning the first asterisk protrusion 144 that has been rotated by 90 degrees about the center 013 upside down, as viewed in a direction orthogonal to the curved surface 24.

In the second asterisk protrusion 146, portions corresponding to the first extending portions 145A-1 and 145A-2, the second extending portions 145B-1 and 145B-2, the third extending portions 145C-1 and 145C-2, and the center 013 of the first asterisk protrusion 144 are referred to as first extending portions 147A-1 and 147A-2, second extending portions 147B-1 and 147B-2, third extending portions 147C-1 and 147C-2, and a center 014. Hereinafter, the above-mentioned six extending portions are collectively referred to as "extending portion 146E".

In the second asterisk protrusion 146, a portion corresponding to the top surface 144C of the first asterisk protrusion 144 is referred to as a top surface 146C. In the second asterisk protrusion 146, portions corresponding to the side surfaces 144D of the first asterisk protrusion 144 are referred to as side surfaces 146D (see Fig. 12B).

### [Others]

In the first asterisk protrusions 144 and the second asterisk protrusions 146 adjacent in the tire circumferential direction and the tire width direction, an interval between the center 013 and the center 014 (hereinafter, referred to as "interval P12") is one predetermined value of greater than 0.1 mm and less than or equal to 1.0 mm. In the present embodiment, the interval P12 is 0.8 mm as an example. The second low brightness region 142 described in the present embodiment is a region where a value of the brightness L* measured using a handy spectrophotometer (NF333) of Nippon Denshoku Industries Co., Ltd. is greater than 10 and less than or equal to 12 as an example.

### (Third Low Brightness Region 152)

As shown in Fig. 11, the third low brightness region 152 includes plural first asterisk protrusions 154 and plural second asterisk protrusions 156 that protrude from the side surface 20. The first asterisk protrusions 154 and the second asterisk protrusions 156 are arranged alternately in the tire circumferential direction and the tire radial direction. The first asterisk protrusion 154 and the second asterisk protrusion 156 are examples of other protrusions.

### [First Asterisk Protrusion 154]

As shown in Fig. 11, the first asterisk protrusion 154 has a shape similar to that of the first asterisk protrusion 134 (see Fig. 9) as viewed in the direction orthogonal to the side surface 20. In the first asterisk protrusion 154, portions corresponding to the first extending portions 135A-1 and 135A-2, the second extending portions 135B-1 and 135B-2, the third extending portions 135C-1 and 135C-2, and the center O11 of the first asterisk protrusion 134 are referred to as first extending portions 155A-1 and 155A-2, second extending portions 155B-1 and 155B-2, third extending portions 155C-1 and 155C-2, and a center 015. Hereinafter, the above-mentioned six extending portions are collectively referred to as "extending portion 154E".

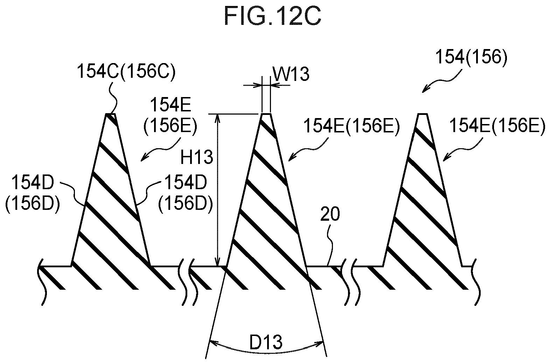

As shown in Fig. 12C, the extending portion 154E of the first asterisk protrusion 154 has a cross sectional shape, in a direction orthogonal to the extending direction, that is a substantially isosceles triangular shape having a flat top surface 154C. That is, the first asterisk protrusion 154 has the top surface 154C and a pair of side surfaces 154D. In the present embodiment, a width of the top surface 154C (W13 in the figure) is 0.02 mm, and an apex angle of the first asterisk protrusion 154 (D13 in the figure) is 26 degrees. A height of the first asterisk protrusion 44 (H13 in the figure) is one predetermined value of from 0.1 mm to 1.0 mm. In the present embodiment, the height of the first asterisk protrusion 154 (13 in the figure) is the same as the height of the first asterisk protrusion 134.

### [Second Asterisk Protrusion 156]

As shown in Fig. 11, the second asterisk protrusion 156 has the same shape as the first asterisk protrusion 154. Specifically, the second asterisk protrusion 156 has a shape obtained by rotating the first asterisk protrusion 154 clockwise about the center 015 by 90 degrees, and turning the first asterisk protrusion 154 that has been rotated by 90 degrees about the center 015 upside down, as viewed in the direction orthogonal to the side surface 20.

In the second asterisk protrusion 156, portions corresponding to the first extending portions 155A-1 and 155A-2, the second extending portions 155B-1 and 155B-2, the third extending portions 155C-1 and 155C-2, and the center 015 of the first asterisk protrusion 154 are referred to as first extending portions 157A-1 and 157A-2, second extending portions 157B-1 and 157B-2, third extending portions 157C-1 and 157C-2, and a center 016. Hereinafter, the above-mentioned six extending portions are collectively referred to as "extending portion 156E".

In the second asterisk protrusion 156, a portion corresponding to the top surface 154C of the first asterisk protrusion 154 is referred to as a top surface 156C. In the second asterisk protrusion 156, portions corresponding to the side surfaces 154D of the first asterisk protrusion 154 are referred to as side surfaces 156D (see Fig. 12C).

### [Others]

In the first asterisk protrusions 154 and the second asterisk protrusions 156 adjacent in the tire circumferential direction and the tire radial direction, an interval between the center 015 and the center 016 (hereinafter, referred to as "interval P13") is one predetermined value of greater than 0.1 mm and less than or equal to 1.0 mm. In the present embodiment, the interval P13 is 1.0 mm as an example. The third low brightness region 152 described in the present embodiment is a region where a value of the brightness L* measured using a handy spectrophotometer (NF333) of Nippon Denshoku Industries Co., Ltd. is greater than 12 and less than or equal to 14 as an example.

### (Functions and Summary)

The interval P11 between the first asterisk protrusion 134 and the second asterisk protrusion 136 formed in the first low brightness region 132 is 0.6 mm (see Fig. 9). The interval P12 between the first asterisk protrusion 144 and the second asterisk protrusion 146 formed in the second low brightness region 142 is 0.8 mm (see Fig. 10). The interval P13 between the first asterisk protrusion 154 and the second asterisk protrusion 156 formed in the third low brightness region 152 is 1.0 mm (see Fig. 11).

Accordingly, in the second low brightness region 142, the amount of light incident to the inside of the groove and emitted to the outside of the groove 118 is larger than the amount of light emitted to the outside of the groove 118 in the first low brightness region 32. In the third low brightness region 152, the amount of light emitted to the outside of the groove 118 is larger than the amount of light emitted to the outside of the groove 118 in the second low brightness region 142. That is, the brightness L* increases in the order of the first low brightness region 132, the second low brightness region 142, the third low brightness region 152, and the tread surface 16. Thus, the brightness L* changes stepwise (gradually).

Other functions of the second embodiment are the same as the functions of the first embodiment.

### <Third Embodiment>

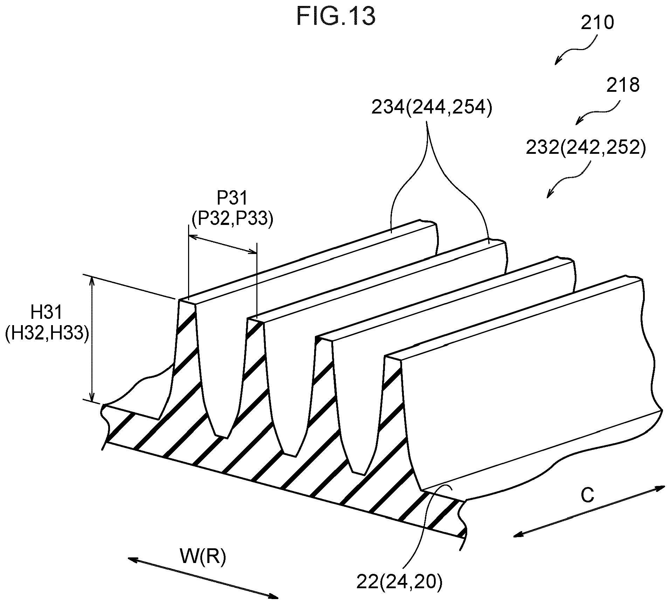

Next, a tire 210 according to a third embodiment of the invention will be described with reference to Fig. 13. Regarding the tire 210 of the third embodiment, portions different from the tire 10 of the first embodiment will be mainly described.

The bottom surface 22 of a groove 218 of the tire 210 is defined as a first low brightness region 232 having a lower brightness than the tread surface 16. The curved surface 24 is defined as a second low brightness region 242 having a lower brightness than the tread surface 16 and having a higher brightness than the first low brightness region 232. A portion of the side surface 20 on the curved surface 24 side is defined as a third low brightness region 252 having a lower brightness than the tread surface 16 and having a higher brightness than the second low brightness region 242.

### (First Low Brightness Region 232)

As shown in Fig. 13, the first low brightness region 232 has plural protrusions 234 that protrude from the bottom surface 22. The protrusions 234 are arranged having intervals therebetween in the tire width direction.

The protrusion 234 has a plate shape extending in the tire circumferential direction, and a plate surface faces in the tire width direction. A plate thickness of the protrusion 234 gradually decreases from a base end on a bottom surface 22 side to a distal end. Specifically, a reduction rate of the plate thickness at a base end portion is higher than a reduction ratio of the plate thickness at a distal end portion.

A height of the protrusion 234 (H31) from the bottom surface 22 is from 0.1 mm to 1.0 mm, and in the present embodiment, the height (H31) is 0.8 mm as an example. Further, an interval between the adjacent protrusions 234 in the tire width direction (hereinafter, referred to as "interval P31") is one predetermined value of greater than 0.1 mm and less than or equal to 1.0 mm.

Here, a first low brightness region 232 described in the present embodiment is a region where a value of the brightness L* measured using a handy spectrophotometer (NF333) of Nippon Denshoku Industries Co., Ltd. is 10 or less as an example.

### (Second Low Brightness Region 242)

As shown in Fig. 13, a second low brightness region 242 has plural protrusions 244 that protrude from the curved surface 24. The protrusions 244 are arranged having intervals therebetween in the tire width direction. Regarding the protrusion 244, portions different from the protrusion 234 will be mainly described.

A height of the protrusion 244 (H32) from the curved surface 24 is from 0.1 mm to 1.0 mm, and in the present embodiment, the height (H32) is 0.6 mm as an example. Further, an interval between the adjacent protrusions 244 in the tire width direction (hereinafter, referred to as "interval P32") is one predetermined value of greater than 0.1 mm and less than or equal to 1.0 mm, and is the same value as the above-described P31.

Here, the second low brightness region 242 described in the present embodiment is a region where a value of the brightness L* measured using a handy spectrophotometer (NF333) of Nippon Denshoku Industries Co., Ltd. is greater than 10 and less than or equal to 12 as an example.

### (Third Low Brightness Region 252)

As shown in Fig. 13, the third low brightness region 252 has plural protrusions 254 that protrude from the side surface 20. The protrusions 254 are arranged having intervals therebetween in the tire radial direction. Regarding the protrusion 254, portions different from the protrusion 234 will be mainly described.

A height of the protrusion 254 (H33) from the side surface 20 is from 0.1 mm to 1.0 mm, and in the present embodiment, the height (H33) is 0.4 mm as an example. Further, an interval between the adjacent protrusions 254 in the tire radial direction (hereinafter, referred to as "interval P33") is one predetermined value of greater than 0.1 mm and less than or equal to 1.0 mm, and is the same value as the above-described P31.

Here, the third low brightness region 252 described in the present embodiment is a region where a value of the brightness L* measured using a handy spectrophotometer (NF333) of Nippon Denshoku Industries Co., Ltd. is greater than 12 and less than or equal to 14 as an example.

The functions of the third embodiment are the same as the functions of the first embodiment except for the functions caused by the protrusion having the asterisk shape.

### <Fourth Embodiment>

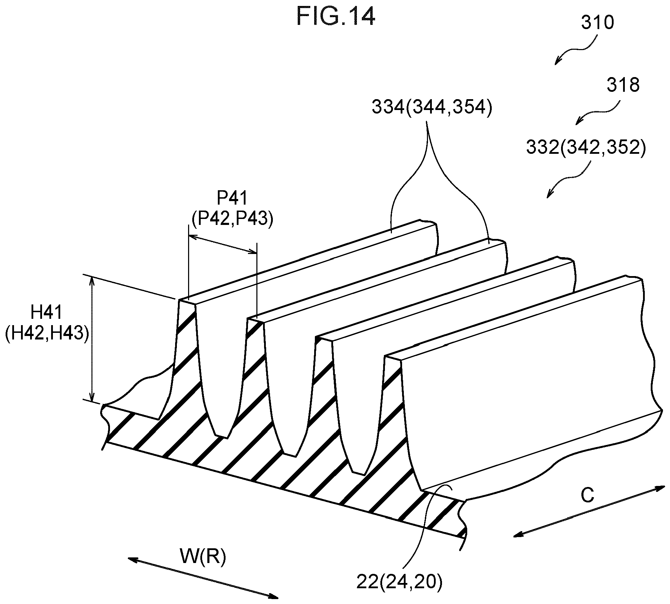

Next, a tire 310 according to a fourth embodiment of the invention will be described with reference to Fig. 14. Regarding the tire 310 of the fourth embodiment, portions different from the tire 110 of the second embodiment will be mainly described.

The bottom surface 22 of a groove 318 of the tire 310 is defined as a first low brightness region 332 having a lower brightness than the tread surface 16. The curved surface 24 is defined as a second low brightness region 342 having a lower brightness than the tread surface 16 and having a higher brightness than the first low brightness region 332. A portion of the side surface 20 on the curved surfaces 24 side is defined as a third low brightness region 352 having a lower brightness than the tread surface 16 and a higher brightness than the second low brightness region 342.

### (First Low Brightness Region 332)

As shown in Fig. 14, the first low brightness region 332 has plural protrusions 334 that protrude from the bottom surface 22. The protrusions 334 are arranged having intervals therebetween in the tire width direction.

The protrusion 334 has a plate shape extending in the tire circumferential direction, and a plate surface faces the tire width direction. A plate thickness of the protrusion 334 gradually decreases from a base end on a bottom surface 22 side to a distal end. Specifically, a reduction rate of the plate thickness at a base end portion is higher than a reduction ratio of the plate thickness at a distal end portion.

A height of the protrusion 334 from the bottom surface 22 (H41) is one predetermined value of from 0.1 mm to 1.0 mm. Further, an interval between the adjacent protrusions 334 in the tire width direction (hereinafter, referred to as "interval P41") is fgreater than 0.1 mm and less than or equal to 1.0 mm, and in the present embodiment, the interval P41 is 0.6 mm as an example.

Here, the first low brightness region 332 described in the present embodiment is a region where a value of the brightness L* measured using a handy spectrophotometer (NF333) of Nippon Denshoku Industries Co., Ltd. is 10 or less as an example.

### (Second Low Brightness Region 342)

As shown in Fig. 14, the second low brightness region 342 has plural protrusions 344 that protrude from the curved surface 24. The protrusions 344 are arranged having intervals therebetween in the tire width direction. Regarding the protrusion 344, portions different from the protrusion 334 will be mainly described.

A height of the protrusion 344 (H42) from the curved surface 24 is from 0.1 mm to 1.0 mm, and is the same value as the above-described height H41 of the protrusion 334. Further, an interval between the adjacent protrusions 344 in the tire width direction (hereinafter, referred to as "interval P42") is greater than 0.1 mm and less than or equal to 1.0 mm, and in the present embodiment, the interval P42 is 0.8 mm as an example.

Here, the second low brightness region 342 described in the present embodiment is a region where a value of the brightness L* measured using a handy spectrophotometer (NF333) of Nippon Denshoku Industries Co., Ltd. is greater than 10 and less than or equal to 12 as an example.

### (Third Low Brightness Region 352)

As shown in Fig. 14, the third low brightness region 352 has a plurality of protrusions 354 that protrude from the side surface 20. The protrusions 354 are arranged having intervals therebetween in the tire radial direction. Regarding the protrusion 354, portions different from the protrusion 334 will be mainly described.

A height of the protrusion 354 (H43) from the side surface 20 is from 0.1 mm to 1.0 mm, and is the same value as the above-described height H41 of the protrusion 334. Further, an interval between the adjacent protrusions 354 in the tire width direction (hereinafter, referred to as "interval P43") is greater than 0.1 mm and less than or equal to 1.0 mm, and in the present embodiment, the interval P43 is 1.0 mm as an example.

Here, the third low brightness region 352 described in the present embodiment is a region where a value of the brightness L* measured using a handy spectrophotometer (NF333) of Nippon Denshoku Industries Co., Ltd. is greater than 12 and less than or equal to 14 as an example.

The functions of the third embodiment are the same as the functions of the second embodiment except for the functions caused by the protrusion having the asterisk shape.

Although the invention has been described in detail with respect to specific embodiments, the invention is not limited to such embodiments, and it is clearly understood for a person skilled in the art that various other embodiments are possible within the scope of the invention as defined by the claims.

For example, although not particularly described in the above embodiments, the protrusion may be provided in a main groove or may be provided in a lug groove.

Although not specifically described in the above embodiments, the brightness may be reduced as compared with the brightness of the tread surface 16 by forming three or more types of protrusions on the bottom surface 22, the side surfaces 20, and the curved surfaces 24.

In the above embodiments, the protrusion is formed at the portion of the side surface 20 on the curved surface 24 side, but the protrusion may be formed at the entire side surface 20. In this case, the functions caused by forming the protrusion on the portion of the side surface 20 on the curved surface 24 side do not occur.

Further, in the above embodiments, the ratio of the groove width to the groove depth of the groove 18 (groove width/groove depth), the cross-sectional area of the groove 18, and the groove wall angle are specified, but these need not be particularly specified. By forming protrusions on the bottom surface 22, the curved surfaces 24, and the side surfaces 22 of the groove 18, it is possible to suppress an unused tire from giving an impression that the tire looks a worn tire due to the contrast of appearance between the tread surface 16 and the portions of the groove 18 on the bottom surface 22 sides, as compared with the case of forming protrusions on only the bottom surface 22 and the curved surfaces 24.

## Claims

1. A tire (10, 110, 210, 310) comprising:
a tread portion (14) including a tread surface (16) and a groove (18, 118, 218, 318) that partitions the tread surface (16), a ratio of a groove width (S1) to a groove depth (F1) (groove width/groove depth) of the groove (18, 118, 218, 318) being from 0.5 to 8.0; and
a plurality of protrusions (34, 36; 134, 136; 234; 334) that protrude from a bottom surface (22) of the groove (18, 118, 218, 318), a height of each protrusion (34, 36; 134, 136; 234; 334) being from 0.1 mm to 1.0 mm, and the plurality of protrusions(34, 36; 134, 136; 234; 334) being arranged having an interval of greater than 0.1 mm and less than or equal to 1.0 mm,
wherein the groove (18, 118, 218, 318) is formed including a pair of side surfaces (20), the bottom surface (22), and a pair of curved surfaces (24) respectively connecting a side surface (20) and the bottom surface (22), and
wherein the tire (10,110, 210, 310) further comprises a plurality of other protrusions (44, 46, 54, 56; 144, 146, 154,156; 244, 254; 344, 354,) that protrude from the side surfaces (20) and the curved surfaces (24), a height of the other protrusions (44, 46, 54, 56; 144, 146, 154,156; 244, 254; 344, 354) being from 0.1 mm to 1.0 mm, and the plurality of other protrusions (44, 46, 54, 56; 144, 146, 154,156; 244, 254; 344, 354) being arranged having an interval of greater than 0.1 mm and less than or equal to 1.0 mm, **characterized in that**:
the height of the protrusions (34, 36; 134, 136; 234; 334) formed at the bottom surface (22), a height of other protrusions (44, 46; 144, 146; 244; 344) formed at the curved surfaces (24), and a height of other protrusions (54, 56; 154, 156; 254; 354) formed at the side surfaces (20) decrease in order from the protrusions (34, 36; 134, 136; 234; 334) formed at the bottom surface (22) to the other protrusions (54, 56; 154, 156; 254; 354) formed at the side surfaces (20), or
the interval between the protrusions (34, 36; 134, 136; 234; 334) formed at the bottom surface(22), an interval between other protrusions (44, 46; 144, 146; 244; 344) formed at the curved surfaces (24), and an interval between other protrusions (54, 56; 154, 156; 254; 354) formed at the side surfaces (20) increase in order from the protrusions (34, 36; 134, 136; 234; 334) formed at the bottom surface (22) to the other protrusions (54, 56; 154, 156; 254; 354) formed at the side surfaces (20).

2. The tire (10, 110, 210, 310) according to claim 1, wherein a cross-sectional area of the groove (18, 118, 218, 318) is from 4 mm² to 500 mm².

3. The tire (10, 110, 210, 310) according to claim 1 or 2, wherein:
an angle at a tread inner side formed between the tread surface (16) and the side surface (20) is from 80 degrees to 135 degrees.

4. The tire (10, 110, 210, 310) according to claim 1, wherein the other protrusions (54, 56; 154, 156; 254; 354) formed at the side surfaces (20) are arranged at portions of the side surfaces (20) on curved surface sides thereof.

## Patentansprüche

1. Reifen (10, 110, 210, 310), der Folgendes umfasst:
einen Laufflächenabschnitt (14), der eine Lauffläche (16) und eine Rille (18, 118, 218, 318), welche die Lauffläche (16) unterteilt, einschließt, wobei ein Verhältnis einer Rillenbreite (S1) zu einer Rillentiefe (F1) (Rillenbreite/Rillentiefe) der Rille (18, 118, 218, 318) von 0,5 bis 8,0 beträgt, und
eine Vielzahl von Vorsprüngen (34, 36; 134, 136; 234; 334), die von einer Sohlenfläche (22) der Rille (18, 118, 218, 318) aus vorspringen, wobei eine Höhe jedes Vorsprungs (34, 36; 134, 136; 234; 334) von 0,1 mm bis 1,0 mm beträgt und die Vielzahl von Vorsprüngen (34, 36; 134, 136; 234; 334) so angeordnet ist, dass sie einen Abstand, größer als 0,1 mm und kleiner als oder gleich 1,0 mm, aufweist,
wobei die Rille (18, 118, 218, 318) so geformt ist, dass sie ein Paar von Seitenflächen (20), die Sohlenfläche (22) und ein Paar von gekrümmten Flächen (24), die jeweils eine Seitenfläche (20) und die Sohlenfläche (22) verbinden, einschließt, und
wobei der Reifen (10, 110, 210, 310) ferner eine Vielzahl von anderen Vorsprüngen (44, 46, 54, 56; 144, 146, 154, 156; 244, 254; 344, 354) umfasst, die von den Seitenflächen (20) und den gekrümmten Flächen (24) aus vorspringen, wobei eine Höhe der anderen Vorsprünge (44, 46, 54, 56; 144, 146, 154, 156; 244, 254; 344, 354) von 0,1 mm bis 1,0 mm beträgt und die Vielzahl von anderen Vorsprüngen (44, 46, 54, 56; 144, 146, 154, 156; 244, 254; 344, 354) so angeordnet ist, dass sie einen Abstand, größer als 0,1 mm und kleiner als oder gleich 1,0 mm, aufweist, **dadurch gekennzeichnet, dass**:
die Höhe der Vorsprünge (34, 36; 134, 136; 234; 334), die an der Sohlenfläche (22) geformt sind, eine Höhe von anderen Vorsprüngen (44, 46; 144, 146; 244, 254; 344), die an den gekrümmten Flächen (24) geformt sind, und eine Höhe von anderen Vorsprüngen (54, 56; 154, 156; 254; 354), die an den Seitenflächen (20) geformt sind, in der Reihenfolge von den Vorsprüngen (34, 36; 134, 136; 234; 334), die an der Sohlenfläche (22) geformt sind, zu den anderen Vorsprüngen (54, 56; 154, 156; 254; 354), die an den Seitenflächen (20) geformt sind, abnehmen oder
der Abstand zwischen den Vorsprüngen (34, 36; 134, 136; 234; 334), die an der Sohlenfläche (22) geformt sind, ein Abstand zwischen anderen Vorsprüngen (44, 46; 144, 146; 244, 254; 344), die an den gekrümmten Flächen (24) geformt sind, und ein Abstand zwischen anderen Vorsprüngen (54, 56; 154, 156; 254; 354), die an den Seitenflächen (20) geformt sind, in der Reihenfolge von den Vorsprüngen (34, 36; 134, 136; 234; 334), die an der Sohlenfläche (22) geformt sind, zu den anderen Vorsprüngen (54, 56; 154, 156; 254; 354), die an den Seitenflächen (20) geformt sind, zunehmen.

2. Reifen (10, 110, 210, 310) nach Anspruch 1, wobei eine Querschnittsfläche der Rille (18, 118, 218, 318) von 4 mm² bis 500 mm² beträgt.

3. Reifen (10, 110, 210, 310) nach Anspruch 1 oder 2, wobei:
ein Winkel auf einer inneren Laufflächenseite, der zwischen der Lauffläche (16) und der Seitenfläche (20) gebildet wird, von 80 Grad bis 135 Grad beträgt.

4. Reifen (10, 110, 210, 310) nach Anspruch 1, wobei die anderen Vorsprünge (54, 56; 154, 156; 254; 354), die an den Seitenflächen (20) geformt sind, an Abschnitten der Seitenflächen (20) auf Seiten der gekrümmten Fläche derselben angeordnet sind.

## Revendications

1. Bandage pneumatique (10, 110, 210, 310), comprenant :
une partie de bande de roulement (14) incluant une surface de bande de roulement (16) et une rainure (18, 118, 218, 318) qui divise la surface de bande de roulement (16), un rapport entre la largeur de rainure (S1) et une profondeur de rainure (F1) (largeur de rainure/profondeur de rainure) de la rainure (18, 118, 218, 318) étant compris entre 0,5 et 8,0 ; et
une pluralité de protubérances (34, 36 ; 134, 136 ; 234 ; 334), qui débordent d'une surface inférieure (22) de la rainure (18, 118, 218, 318), une hauteur de chaque protubérance (34, 36 ; 134, 136 ; 234, 334) étant comprise entre 0,1 mm et 1,0 mm, et la pluralité de protubérances (34, 36 ; 134, 136 ; 234 ; 334) étant agencées à un intervalle supérieur à 0,1 mm et inférieur ou égal à 1,0 mm ;
dans lequel la rainure (18, 118, 218, 318) est formée de sorte à inclure respectivement une paire de surfaces latérales (20), la surface inférieure (22), et une paire de surfaces courbées (24) reliant respectivement une surface latérale (20) et la surface inférieure (22) ; et
dans lequel le bandage pneumatique (10, 110, 210, 310) comprend en outre une pluralité d'autres protubérances (44, 46, 54, 56 ; 144, 146, 154, 156 ; 244, 254 ; 344, 354) qui débordent des surfaces latérales (20) et des surfaces courbées (24), une hauteur des autres protubérances (44, 46, 54, 56 ; 144, 146, 154, 156 ; 244, 254 ; 344, 354) étant comprise entre 0,1 mm et 1,0 mm, et la pluralité d'autres protubérances (44, 46, 54, 56 ; 144, 146, 154, 156 ; 244, 254 ; 344, 354) étant agencées à un intervalle supérieur à 0,1 mm et inférieur ou égal à 1,0 mm, **caractérisé en ce que** :
la hauteur des protubérances (34, 36 ; 134, 136 ; 234 ; 334) formées au niveau de la surface inférieure (22), une hauteur d'autres protubérances (44, 46 ; 144, 146 ; 244 ; 344) formées au niveau des surfaces courbées (24), et une hauteur d'autres protubérances (54, 56 ; 154, 156 ; 254, 354) formées au niveau des surfaces latérales (20) diminuent dans l'ordre allant des protubérances (34, 36 ; 134, 136 ; 234 ; 334) formées au niveau de la surface inférieure (22) vers les autres protubérances (54, 56 ; 154, 156 ; 254 ; 354) formées au niveau des surfaces latérales (20) ; ou
l'intervalle entre les protubérances (34, 36 ; 134, 136 ; 234 ; 334) formées au niveau de la surface inférieure (22), un intervalle entre d'autres protubérances (44, 46 ; 144, 146 ; 244 ; 344) formées au niveau des surfaces courbées (24), et un intervalle entre d'autres protubérances (54, 56 ; 154, 156 ; 254 ; 354) formées au niveau des surfaces latérales (20) sont accrus dans l'ordre allant des protubérances (34, 36 ; 134, 136 ; 234 ; 334) formées au niveau de la surface inférieure (22) vers les autres protubérances (54, 56 ; 154, 156 ; 254 ; 354) formées au niveau des surfaces latérales (20).

2. Bandage pneumatique (10, 110, 210, 310) selon la revendication 1, dans lequel une surface de section transversale de la rainure (18, 118, 218, 318) est comprise entre 4 mm² et 500 mm².

3. Bandage pneumatique (10, 110, 210, 310) selon les revendications 1 ou 2, dans lequel :
un angle au niveau d'un côté interne de la bande de roulement, formé entre la surface de bande de roulement (16) et la surface latérale (20) est compris entre 80 degrés et 135 degrés.

4. Bandage pneumatique (10, 110, 210, 310) selon la revendication 1, dans lequel les autres protubérances (54, 56 ; 154, 156 ; 254 ; 354) formées au niveau des surfaces latérales (20) sont agencées au niveau de parties des surfaces latérales (20), sur les côtés des surfaces courbées de celles-ci.
